# EUROPÄISCHE PATENTSCHRIFT

(11) **EP 3 093 084 B1**
(45) Veröffentlichungstag und Bekanntmachung des Hinweises auf die Patenterteilung: **22.08.2018**
(21) Anmeldenummer: 16169220.7
(22) Anmeldetag: 11.05.2016
(51) Int. Cl.: B22D 19/00, F16L 37/00, B22D 19/04

(54) **STATOR FÜR EINE DREHDURCHFÜHRUNG SOWIE HERSTELLUNG EINES STATORS**
STATOR FOR A ROTARY FEED-THROUGH AND PRODUCTION OF A STATOR
STATOR DE PASSAGE ROTATIF ET PRODUCTION D'UN STATOR

(30) Priorität: 13.05.2015 DE 102015107595
(43) Veröffentlichungstag der Anmeldung: 16.11.2016
(73) Patentinhaber: Dr. Walter Hunger Beteiligungs GmbH & Co. Besitz KG, 97080 Würzburg (DE)
(72) Erfinder: Kabst, Marcus, 97737 Gemünden (DE); Pfeuffer, Christian, 97273 Kümach (DE)
(74) Vertreter: Witte, Weller & Partner Patentanwälte mbB

(56) Entgegenhaltungen:
- EP-A1- 0 562 269
- DE-A1- 3 508 076
- DE-A1- 19 621 020
- DE-A1-102010 027 895
- DE-C1- 19 960 907
- US-A- 5 740 851

## Beschreibung

Die vorliegende Erfindung betrifft ein Verfahren zur Herstellung eines Stators für eine fluidische Drehdurchführung, sowie ein modular gefertigtes Bauteil, insbesondere einen modular gefertigten Stator. Ferner betrifft die Erfindung vorteilhafte Verwendungen eines solchen Bauteils.

Aus der DE 10 2004 027 109 A1 ist ein Verfahren zur Herstellung eines Umformwerkzeugs bekannt, wobei das Werkzeug temperierbar ist. Das Werkzeug wird urformend mittels Gießen hergestellt, wobei Rohrleitungen in eine Gießform eingelegt werden. Die Rohrleitungen werden im Zuge des Gießens mit dem Gusswerkstoff zumindest bereichsweise umgossen und als Heiz- und/oder Kühlkanäle in das das Werkzeug bildende Gussteil integriert. Die DE 10 2004 027 109 A1 bezieht sich nicht auf Drehdurchführungen und insbesondere nicht auf fluidische Drehdurchführungen.

Aus der US 5,740,851 A ist ein Verfahren zur Herstellung eines Bauteils bekannt, das vorgeformte, fluidführende Durchgänge aufweist, wobei das Verfahren die folgenden Schritte umfasst: Bereitstellen eines Metall-Laminats, Rollen des Laminats zum Ausbilden eines rohrförmigen Schlauchkörpers, Biegen des Schlauchkörpers, um mindestens ein Rohrelement mit einer gewünschten Konfiguration zu erzeugen, Anordnen des Schlauchkörpers um eine Rohrbaugruppe zu bilden, die die fluidführenden Durchgänge definiert, Gießen von Eisen um die Rohrbaugruppe herum, um einen festen Block mit der darin eingebetteten Rohrbaugruppe herzustellen. Die US 5,740,851 A bezieht sich nicht auf Drehdurchführungen und insbesondere nicht auf fluidische Drehdurchführungen.

Aus der DE 26 00 406 A1 sowie der EP 0 342 554 A1 sind aus Blechpaketen gebildete Statoren für elektrische Maschinen bekannt, die Kühlkanäle aufweisen, die umgossen sind. Die Dokumente beziehen sich nicht auf Drehdurchführungen und insbesondere nicht auf fluidische Drehdurchführungen.

Drehdurchführungen sind im Stand der Technik allgemein bekannt. Drehdurchführungen werden auch als Drehverteiler bezeichnet. Üblicherweise dienen Drehdurchführungen der Kopplung eines stehenden und eines rotierenden Anlagenteils und können über eine derartige Verbindung Fluide übertragen. Bei den Fluiden kann es sich grundsätzlich um Gase, Dämpfe und um Flüssigkeiten handeln, insbesondere um Druckflüssigkeiten für Hydraulikanwendungen.

Aus der DE 10 2010 027 895 A1 ist eine Drehdurchführung für ein Anbaugerät bekannt, die einen in einem Gehäuse drehfest gehaltenen Stator und einen vorzugsweise mittels eines Schneckengetriebes um den Stator drehbaren Rotor aufweist, wobei die Drehdurchführung zur Durchleitung eines Druckmediums über mindestens einen Medienkanal durch den Stator ausbebildet ist, wobei der mindestens eine Medienkanal einen durch den Stator hindurchgeführten ersten Kanalabschnitt und einen damit kommunizierenden zweiten Kanalabschnitt aufweist, die über die Drehdurchführung miteinander verbunden sind.

Eine Drehdurchführung allgemeiner Art ist beispielsweise aus der DE 35 080 76 A1 bekannt. Weitere hydraulische Drehdurchführungen sind beispielsweise aus den Dokumenten DE 196 21 020 A1, EP 0 562 269 A1 sowie DE 199 60 907 C1 bekannt.

Wesentliche Bauteile einer Drehdurchführung sind der Stator sowie der Rotor. Üblicherweise ist der Stator als schaftförmiges oder wellenförmiges Bauteil gestaltet und gestellfest angeordnet. Demgegenüber ist der Rotor üblicherweise am Stator relativ zu diesem verschwenkbar oder verdrehbar gelagert. Es versteht sich, dass die Zuordnung je nach Anwendungsfall auch umgekehrt erfolgen kann. Sowohl der Stator als auch der Rotor weisen Kanäle zur Übertragung von Fluiden auf. Eine Überleitung vom (feststehenden) Stator zum (drehbaren) Rotor erfolgt üblicherweise über sich umfänglich erstreckende Nuten (auch: Ringkanäle), die entweder am Stator oder am Rotor ausgebildet sind. Drehdurchführungen kommen beispielsweise bei Robotern, hydraulischen Arbeitsmaschinen oder Baumaschinen, Werkzeugmaschinen oder ähnlichen Anlagen im industriellen Umfeld zum Einsatz. Neben den genannten wesentlichen Bauteilen Rotor und Stator weisen Drehdurchführungen im Allgemeinen Dichtungsanordnungen auf, die die erforderliche druckfeste Abdichtung zwischen dem Stator und dem Rotor gewährleisten. Ferner ist üblicherweise eine Lageranordnung vorgesehen, um die Relativbewegung zwischen dem Rotor und dem Stator zu ermöglichen.

Drehdurchführungen im Umfeld hydraulischer Maschinen können eine Mehrzahl oder gar Vielzahl von Kanälen aufweisen. Auf diese Weise können entsprechend viele Pfade zur Verfügung gestellt werden, über die verschiedene Medien übertragen werden können. Sofern die Drehdurchführung zur Übertragung von hydraulischen Fluiden ausgebildet ist, muss mit beträchtlichen Belastungen im Betrieb gerechnet werden. Übliche Betriebsdrücke des hydraulischen Fluids können etwa im Bereich von 10 bis 500 bar liegen. Je nach Anwendung kann es erforderlich sein, die Drehdurchführung in einem Temperaturbereich von etwa -30°C (Celsius) bis etwa +100°C zu betreiben. Übliche Volumenströme für die zu übertragenden hydraulischen Fluide liegen etwa im Bereich von 1 bis 1000 l/min. Es versteht sich, dass dies lediglich beispielhafte Betriebsbedingungen sind. Jedoch wird ersichtlich, dass die Drehdurchführungen beträchtlichen Belastungen ausgesetzt sein können. Drehdurchführungen sind bei vielen Anwendungen wesentliche, zentrale Komponenten, die die Funktion des Gesamtsystems entscheidend beeinflussen.

Statoren von Drehdurchführungen für hydraulische Fluide, die im industriellen Umfeld oder auf dem Gebiet der mobilen Arbeitsmaschinen eingesetzt werden, werden üblicherweise spanend aus Halbzeugen gefertigt, die aus Rundmaterial bestehen. Dies kann etwa die Bereitstellung eines stangenartigen Halbzeugs aus einem Stahl beinhalten. Vom stangenartigen Halbzeug können Abschnitte abgetrennt oder abgestochen werden. In die Abschnitte können radiale und axiale Bohrungen eingebracht werden, die schlussendlich die Kanäle oder Pfade für die zu übertragenden Fluide ausbilden. Ferner kann eine Rundbearbeitung zur Erzeugung der umlaufenden Nuten sowie zur Oberflächenbearbeitung im Bereich von Anschlussflächen, Lagersitzen und Dichtungssitzen erforderlich sein. Insbesondere die Erzeugung der axialen Bohrungen für die Fluidkanäle kann mit einem beträchtlichen Aufwand verbunden sein. Üblicherweise weisen derartige Bohrungen ein hohes bis sehr hohes Längen-Durchmesser-Verhältnis auf. Die Bohrungen können etwa auch als Tieflochbohrungen bezeichnet werden.

Je nachdem, für wie viele Kanäle oder Leitungen die Drehdurchführung ausgelegt ist, muss eine entsprechende Anzahl von Tieflochbohrungen erzeugt werden. Dies geht mit einem beträchtlichen Zeitaufwand und einem beträchtlichen Zerspanungsvolumen einher. Auch der Werkzeugverschleiß bei der Erzeugung dieser Bohrungen ist nicht zu unterschätzen. Ferner neigen Tieflochbohrungen zum Verlaufen, so dass die Maßhaltigkeit und die Funktionssicherheit häufig nicht gewährt werden kann. Dies kann zu einem erhöhten Ausschuss führen und die Herstellungskosten weiter erhöhen.

Vor diesem Hintergrund liegt der Erfindung die Aufgabe zugrunde, ein Verfahren zur Herstellung eines Stators für eine Drehdurchführung sowie ein Bauteil, insbesondere einen Stator, für eine Drehdurchführung anzugeben, die zu einer effizienteren Fertigung beitragen können. Insbesondere soll die Fertigung von Mittelserien und Großserien effizienter und kostengünstiger vonstatten gehen können. Ferner soll möglichst das zu zerspanende Volumen bei der Herstellung der Drehdurchführung verringert werden. Ferner soll möglichst der Materialeinsatz reduziert werden. Ferner sollen Gestaltungen ermöglicht sein, die in einfacher Weise eine Anpassung an verschiedene Einsatzbedingungen und Konfigurationen bzw. Layouts der Drehdurchführung ermöglichen sollen.

Das Verfahren betreffend wird diese Aufgabe durch ein Verfahren zur Herstellung einer fluidischen Drehdurchführung, die einen Stator umfasst, gelöst, wobei das Verfahren die folgenden Schritte aufweist:
- Bereitstellung zumindest eines zumindest abschnittsweise rohrartig gestalteten Einlegeteils,
- Anordnen des zumindest einen Einlegeteils in einem Gusswerkzeug,
- Formen eines Trägerteils durch Einbringen eines fließfähigen Werkstoffs in das Gusswerkzeug, wobei das zumindest eine Einlegeteil zumindest abschnittsweise durch den fließfähigen Werkstoff umschlossen wird, und wobei das Trägerteil und das zumindest eine Einlegeteil gefügt werden und ein Verbundgussteil ausbilden,

- Erzeugen einer Basiskonfiguration des Stators, wobei eine Mehrzahl von rohrartigen Einlegteilen vorgesehen ist, die in das Trägerteil eingebettet sind, und die eine Mehrzahl von Kanälen definieren, und
- Erzeugen einer Variante des Stators durch gezieltes Sperren und Freigeben jeweiliger Kanäle.

Die Aufgabe der Erfindung wird auf diese Weise vollkommen gelöst.

Das Verbundgussteil bildet die Basis für den Stator der fluidischen Drehdurchführung. Erfindungsgemäß wird nämlich der Stator für die Drehdurchführung nunmehr in einem kombinierten Verfahren hergestellt, wobei die erforderlichen Kanäle oder Pfade für das zu übertragende Fluid zumindest abschnittsweise durch rohrartige Einlegeteile ausgebildet werden können. Das zumindest eine Einlegeteil, vorzugsweise eine Mehrzahl von Einlegeteilen, wird in einem Gussprozess mit dem Gusswerkstoff umgossen. Auf diese Weise kann sich ein Verbund ergeben, der aus dem Trägerteil und dem zumindest einen Einlegeteil besteht. Der Verbund kann endkonturnah gestaltet sein, da das Gussverfahren bereits die Erzeugung von Gestaltelementen des Stators erlaubt, die bei der klassischen Herstellung erst ausgehend von einem massiven Vollmaterial zerspant werden müssen. Somit kann der Materialeinsatz verringert werden. Fertigungszeiten, insbesondere für die spanende Herstellung und/oder Bearbeitung können deutlich reduziert werden.

Ferner gestattet das Verfahren die Verwendung verschiedener Werkstoffe für das zumindest eine Einlegeteil sowie das Trägerteil. Mit anderen Worten kann etwa beim Einlegeteil bzw. bei den Einlegeteilen ein erster Werkstoff mit bestimmten Eigenschaften und beim Trägerteil ein zweiter Werkstoff mit bestimmten Eigenschaften verwendet werden, die sich voneinander unterscheiden. Beispielhaft kann das rohrartig gestaltete Einlegeteil als Stahlrohr gestaltet sein und demgemäß eine hohe Festigkeit aufweisen, um den Betriebsbedingungen, insbesondere den hohen Betriebsdrücken, widerstehen zu können. Das Trägerteil kann hingegen deutlich massiver (mit größerer Wandstärke) als das Einlegeteil ausgeführt werden. Insofern kann beim Trägerteil grundsätzlich ein Werkstoff verwendet werden, der eine geringere Festigkeit als der Werkstoff für das Einlegeteil aufweist. Beim Trägerteil kann insbesondere ein Werkstoff verwendet werden, der sowohl für den genutzten Gussprozess geeignet als auch zumindest hinreichend zerspanbar ist.

Allgemein kann das Einlegeteil als Rohr oder Stahlrohr gestaltet sein. Je nach Anwendung kann das Einlegeteil aus einem Baustahl gebildet sein. Es ist auch vorstellbar, Rohre aus korrosionsbeständigem Stahl für das Einlegeteil zu verwenden. Gemäß einer weiteren Ausgestaltung kann es sich auch bei dem Gusswerkstoff um einen korrosionsbeständigen Werkstoff handeln, vorzugsweise um einen nichtrostenden Werkstoff. Denkbar ist die Verwendung von nichtrostenden Edelstählen. Auf diese Weise kann der Stator auch für Anwendungen in stark korrosiver Umgebung geeignet sein, etwa für Off-Shore Anwendungen. Ferner kann auf diese Weise eine Eignung für korrosive Medien oder Fluide gewährleistet werden.

Das Formen des Trägerteils erfolgt im Rahmen eines Gussprozesses. Vorstellbar ist etwa Schwerkraftguss (auch bezeichnet als Niederdruckguss). Ferner kann der Gussprozess als Druckgussverfahren (Hochdruckguss) gestaltet sein. Jedoch ist es grundsätzlich auch vorstellbar, einen Spritzgussprozess zu nutzen. Insofern betrifft das Verfahren gemäß der vorliegenden Erfindung einerseits Verbundgussteile, deren Trägerteil auf einem metallischen Werkstoff basiert. Es ist jedoch auch vorstellbar, Trägerteile zu nutzen, die einen Kunststoffwerkstoff umfassen, insbesondere einen verstärkten Kunststoff, vorzugsweise einen faserverstärkten Kunststoff. Da die Einlegeteile etwa aus Stahlrohren oder ähnlich belastbaren Bauteilen gefertigt sind, können grundsätzlich auch Trägerteile aus Kunststoff verwendet werden. Das sich ergebende Verbundgussteil kann auch hohen Belastungen bzw. Drücken standhalten, die üblicherweise bei hydraulischen Anwendungen auftreten können.

Ein weiterer Vorteil kann darin gesehen werden, dass die genutzten Werkstoffe für das Trägerteil bzw. die Einlegeteile im Hinblick auf das zu erwartende Verschleißverhalten und/oder Korrosionsverhalten gezielt ausgewählt werden können. Das kombinierte Fertigungsverfahren, das ein Umgießen bzw. Umspritzen des zumindest einen Einlegeteils umfasst, erlaubt eine ausgezeichnete Verbindung zwischen dem zumindest einen Einlegeteil und dem umgebenden Trägerteil. Daher ist unter einem Verbundgussteil im Sinne der vorliegenden Offenbarung insbesondere kein "gebautes" Verbundteil zu verstehen. Vielmehr bezieht sich der Begriff "Verbundgussteil" ausdrücklich auf Prozesse, bei denen das zumindest eine Einlegeteil zumindest abschnittsweise umgossen bzw. umspritzt ist. Es ist im Regelfall nicht vorgesehen, die auf diese Art und Weise erzeugte Verbindung wieder zu lösen. Dies kann grundsätzlich nur durch Zerstören des Verbundgussteils bewirkt werden.

Ein weiterer Vorteil des Verfahrens besteht darin, dass zur Ausbildung von Kanälen für die Durchleitung des Fluids keine aufwendigen Schieber oder Kerne erforderlich sind. Da die Kanäle nicht oder zumindest nicht vollständig direkt im Trägerteil ausgeführt sind, kann das Gusswerkzeug relativ einfach gestaltet werden, so dass sich Vorteile bei der Standzeit ergeben können. Auch dies trägt dazu bei, dass kleinere Losgrößen unter Nutzung der zumindest teilweise urformenden Fertigung wirtschaftlich herstellbar sind.

Üblicherweise ist der Stator einer Drehdurchführung als zylindrisches oder flanschartig gestaltetes Bauteil ausgeführt. Bei einer solchen Gestaltung ist im Rotor eine entsprechende Aufnahme vorhanden, so dass der Stator und der Rotor miteinander gefügt werden können. Es sind jedoch auch Varianten vorstellbar, bei denen der Stator als hohlzylindrisches Wellenbauteil gestaltet ist, das in seinem Inneren einen schaftartig gestalteten Rotor trägt.

Gemäß einer weiteren Ausgestaltung umfasst das Verfahren ferner Folgendes:
- Spanende Bearbeitung des Verbundgussteils, umfassend zumindest einen der folgenden Schritte:
   - Erzeugen zumindest einer axialen oder umfänglichen Funktionsfläche am Trägerteil, und
   - Erzeugen eines Zugangs zu dem zumindest einen Einlegeteil.

Dies kann insbesondere die Ausbildung und/oder Bearbeitung von Umfangsnuten betreffen, die etwa auch als Ringkanäle bezeichnet werden. Weiterhin können Funktionsflächen ausgebildet werden, die zur Aufnahme von Lagern, Dichtungen und ähnlichen Gestaltelementen dienen. Da das Trägerteil gewissermaßen urformend durch Gießen gefertigt wird, kann es endkonturnah bereitgestellt werden. Somit wird das zu zerspanende Volumen deutlich reduziert.

Das Erzeugen eines Zugangs zum Einlegeteil kann beispielsweise das Einbringen einer radialen Bohrung in das Verbundgussteil umfassen, um beispielsweise einen sich axial erstreckenden Abschnitt des Einlegeteils radial zu kontaktieren. Auf diese Weise kann ein Kanal erzeugt werden, dessen Mündung an einer Umfangsfläche des Stators vorgesehen ist. Da jedoch zumindest wesentliche Abschnitte der Kanäle durch die Einlegeteile ausgebildet sind, lassen sich aufwendige Bohrvorgänge, insbesondere Tiefbohrschritte, vermeiden.

Das zu bearbeitende Verbundgussteil kann beispielhaft für Mehrspindel-Drehautomaten optimiert werden, so dass sich eine hocheffiziente Bearbeitung im Anschluss an den Urformprozess (Gussprozess) anschließt. Auf diese Weise kann sich insbesondere im Hinblick auf die Fertigung von Mittelserien oder Großserien eine weitere Rationalisierung ergeben.

Gemäß einer weiteren Ausgestaltung ist das zumindest eine Einlegeteil als durchgängige Fluidleitung ausgebildet. Auf diese Weise kann das Einlegeteil etwa rohrartig gestaltet werden, wobei ein erstes Ende und ein zweites Ende vorgesehen sind. Es sind auch Anwendungen vorstellbar, bei denen zumindest ein rohrartig gestaltetes Einlegeteil, das den Stator vorzugsweise axial durchdringt, als Kanal für elektrische Leiter genutzt wird. Auch ein derartiger Kabelkanal kann effektiv durch ein Einlegeteil gebildet werden. Auch für einen solchen Kanal ist kein separater Schieber im Gusswerkzeug erforderlich. Vorzugsweise werden das erste Ende und das zweite Ende des Einlegeteils beim Gussvorgang durch das Gusswerkzeug oder ein separates Teil abgedeckt bzw. abgedichtet. Auf diese Weise wird das Eindringen des fließfähigen Werkstoffs, der das Trägerteil ausbildet, in das Einlegeteil vermieden.

So kann beispielhaft ein Einlegeteil oder eine Mehrzahl von Einlegeteilen vorgesehen sein, die sich jeweils im Wesentlichen axial erstrecken und an einem ersten axialen Ende und an einem zweiten axialen Ende des Verbundgussteils über die axiale Erstreckung des Trägerteils hinausragen. Mit anderen Worten kann ein derartig gestaltetes Einlegeteil eine Durchgangsbohrung oder eine durchgehende Ausnehmung entlang der Längserstreckung des Verbundgussteils bereitstellen.

Es versteht sich jedoch, dass eine derartige Gestaltung nicht dem finalen Endzustand des Stators entsprechen muss. Vielmehr ist gemäß zumindest einiger Ausgestaltung des Verfahrens eine Bearbeitung vorgesehen, derart, dass etwa ein sich axial erstreckendes Einlegeteil durch eine radiale Bohrung kontaktiert wird, so dass ein Kanal erzeugt wird, der sich zumindest abschnittsweise axial und radial erstreckt. Bei einer solchen Gestaltung kann dann etwa ein nicht mehr erforderlicher Strang oder Abschnitt des Einlegeteils verschlossen werden.

Gemäß einer weiteren Ausgestaltung des Verfahrens umfasst der Schritt des Bereitstellens des zumindest einen Einlegeteils ferner Folgendes:
- Bereitstellen zumindest eines Einlegeteils, das sich zumindest abschnittsweise axial und zumindest abschnittsweise radial erstreckt, wobei das Einlegeteil dazu ausgebildet ist, einen Festanschluss-Bereich und einen Drehanschluss-Bereich des Stators miteinander zu verbinden.

Diese Gestaltung kann etwa die Verwendung gebogener Rohr umfassen. Gebogene Rohre können etwa eine 90°-Biegung umfassen. Es ist grundsätzlich auch vorstellbar, Rohre mit zwei 90°-Biegungen zu nutzen, die insgesamt etwa U-förmig gestaltet sind. Allgemein kann ein Einlegeteil eine Erstreckung mit einem Abschnitt mit einer ersten Richtungskomponente und einem Abschnitt mit einer zweiten Richtungskomponente aufweisen, die über eine Biegung miteinander verbunden sind.

Ein Einlegeteil, das einen sich axial erstreckenden Abschnitt, eine Biegung und einen sich daran anschließenden sich radial erstreckenden Abschnitt aufweist, kann den gewünschten Kanal für das Fluid vollständig abbilden. Mit anderen Worten erlaubt diese Ausgestaltung den Verzicht auf nachträglich eingebrachte radiale Bohrungen zum Kontaktieren des Einlegeteils. Dies kann eine weitere Vereinfachung des Fertigungsprozesses mit sich bringen. Insbesondere kann die Nachbearbeitung bzw. das Zerspanen des Verbundgussteils weiter reduziert werden. Der Drehanschluss-Bereich des Stators ist der Bereich, in dem der Stator mit dem Rotor zusammenwirkt, um ein Fluid zu übertragen. Demgemäß ist beim Drehanschluss-Bereich ein Ringkanal bzw. eine Ringnut oder umlaufende Nut vorgesehen, so dass das Fluid übertragen werden kann, auch wenn sich der Stator und der Rotor relativ zueinander verdrehen. Der Festanschluss-Bereich ist der Bereich, in dem der Stator gestellfest durch eine Fluidleitung kontaktiert wird.

Mit anderen Worten kann das Einlegeteil etwa als gebogenes Rohr bzw. gebogener Rohrabschnitt gestaltet sein. Es ist grundsätzlich auch vorstellbar, ein Einlegeteil zu nutzen, dass aus gefügten Rohrabschnitten hergestellt ist. Die Rohrabschnitte können etwa eine Gehrung aufweisen und miteinander verschweißt oder in ähnlicher Weise gefügt sein. Auch auf diese Weise kann sich eine Umlenkung zwischen dem sich axial erstreckenden Abschnitt und dem sich radial erstreckenden Abschnitt ergeben.

Gemäß einer weiteren Ausgestaltung des Verfahrens umfasst der Schritt des Bereitstellens des zumindest einen Einlegeteils ferner Folgendes:
- Bereitstellen zumindest eines Einlegeteils, das sich im Wesentlichen axial erstreckt,
wobei ein Zugang zu dem zumindest einen Einlegeteil durch spanende Bearbeitung erzeugt wird, insbesondere durch Erzeugen einer sich zumindest abschnittsweise radial erstreckenden Bohrung.

Gemäß dieser Ausgestaltung können die Rohre, die die Einlegeteile bilden, besonders einfach gestaltet sein und im Wesentlichen eine gerade Erstreckung umfassen. Radiale Bohrungen zur Kontaktierung eines solchen Einlegeteils erfordern im Allgemeinen weniger Aufwand, da die erforderliche Eindringtiefe nur begrenzt ist. Das Einlegeteil kann axiale Tieflochbohrungen ersetzen und somit die Bearbeitung deutlich vereinfachen.

Es ist gemäß einer weiteren Ausgestaltung auch vorstellbar, Einlegeteile zu verwenden, deren axiale Erstreckung kleiner als die axiale (Gesamt-)Erstreckung des Stators ist. Derartige Einlegeteile sind vorzugsweise an einem Ihrer Enden verschlossen, so dass kein Gusswerkstoff eindringen kann. Das Verschließen kann etwa umformend durch Pressen, Biegen oder Falzen erfolgen, um den offenen Querschnitt des Einlegeteils zu verschließen. Alternativ ist es auch vorstellbar, das Ende stoffschlüssig, etwa durch Schweißen zu verschließen. Mit anderen Worten kann eine Gestaltung ähnlich einer Sackloch-Bohrung oder Sackloch-Tiefbohrung erzielt werden.

Es ist gemäß einer alternativen Ausgestaltung auch vorstellbar, Einlegeteile zu verwenden, deren axiale Erstreckung zwar größer als die axiale Erstreckung des Stators ist, die jedoch zusätzlich definiert an einem Zwischenpunkt ihrer axialen Erstreckung verschlossen bzw. gesperrt sind. Ein solcher Verschluss des Querschnitts kann wiederum durch Pressen, Biegen, Schweißen, das Einbringen von Stopfen oder ähnliche Verfahren erfolgen.

Es versteht sich, dass das Einlegeteil grundsätzlich auch andersartig gestaltet sein kann. Insbesondere muss das Einlegeteil nicht zwingend sich ideal axial erstreckende Abschnitte und sich ideal radial erstreckende Abschnitte umfassen. Es ist auch vorstellbar, das Einlegeteil zumindest abschnittsweise "schräg" auszubilden bzw. anzuordnen. Auch Kröpfungen und ähnliche Gestaltelemente sind vorstellbar. Da die Einlegeteile, die mit dem fließfähigen Werkstoff umgossen werden, der das Trägerteil ausbildet, ist es grundsätzlich vorstellbar, eine nahezu beliebige 3D-Gestalt für die Einlegeteile vorzusehen. Dies betrifft auch die Anordnung und Relativzuordnung einer Mehrzahl von Einlegeteilen, die gemeinsam im Gusswerkzeug positioniert werden, um im Trägerteil in ihrer Relativlage fixiert zu werden.

Insgesamt lässt sich also mit Hilfe der Einlegeteile eine hohe Gestaltungsvielfalt und Gestaltungsfreiheit für die Kanäle bewirken. Dies kann beispielhaft eine strömungsgünstige Auslegung der Kanäle betreffen mit der durch eine gleichmäßige Umlenkung der Strömung dem Auftreten von Kavitation entgegengewirkt werden kann.

Beispielsweise können Biegungen oder Umlenkungen der Kanäle durch gebogene Abschnitte des Einlegeteils erzeugt werden, die entsprechende Mindestbiegeradien aufweisen, um eine strömungsgünstige Umlenkung des Fluids zu erlauben.

Gemäß einer weiteren Ausgestaltung des Verfahrens umfasst dieses ferner die folgenden Schritte:
- Bereitstellen zumindest eines Verschlusselements, insbesondere zumindest eines Verschlussstopfens, und
- wahlweise Sperren zumindest eines Abschnitts eines Einlegeteils durch Fügen des Verschlusselements.

Auf diese Weise kann die Herstellung des Stators mit noch höherer Flexibilität erfolgen. Eine Anpassung an verschiedene Anwendungen und Einsatzbedingungen kann noch einfacher erfolgen. Beispielhaft ist vorstellbar, ein Ende eines sich axial erstreckenden Einlegeteils zu sperren, wenn das Einlegeteil durch eine sich radial erstreckende Bohrung kontaktiert wird. Es ist jedoch auch vorstellbar, Einlegeteile durch das Anbringen oder Einbringen von Verschlusselementen vollständig zu deaktivieren. Auf diese Weise können verschiedene Varianten erzeugt werden, die beispielsweise lediglich einen wirksamen Kanal aufweisen, obwohl eine Mehrzahl von Einlegeteilen vorhanden ist.

Das Verfahren umfasst ferner die Schritte:
- Erzeugen einer Basiskonfiguration des Stators, wobei eine Mehrzahl von rohrartigen Einlegeteilen vorgesehen ist, die in das Trägerteil eingebettet sind, und die eine Mehrzahl von Kanälen definieren, und
- Erzeugen einer Variante des Stators durch gezieltes Sperren und Freigegen jeweiliger Kanäle.

Dies kann beispielshaft durch Verschlusselemente, insbesondere durch Verschlussstopfen, oder Ähnliches erfolgen. Es ist jedoch auch vorstellbar, die Kanäle gezielt freizugeben, indem etwa durch spanende Bearbeitung Bohrungen erzeugt werden, die die Kanäle kontaktieren, oder indem Verschlusselemente gezielt entfernt werden.

Mit anderen Worten kann eine Mehrzahl von Varianten auf Basis lediglich einer Basiskonfiguration erzeugt werden. Dies kann durch gezieltes, selektives Aktivieren oder Deaktivieren der durch die Kanäle bereitgestellten Fluidpfade erfolgen.

Gemäß einer alternativen Ausgestaltung erfolgt die Variantenbildung bereits vorher, nämlich dann, wenn die Einlegeteile im Gusswerkzeug anzuordnen sind. Es ist vorstellbar, je nach gewünschter Variante oder Konfiguration die Anzahl und/oder Gestalt der genutzten Einlegeteile zu variieren. Auf diese Weise kann in einfacher Weise ein Baukasten für den Stator bereitgestellt werden. Der Baukasten kann etwa ein Gusswerkzeug umfassen, das in unterschiedlichen Varianten mit den Einlegeteilen bestückbar ist.

Durch Wahl der aktuell zu verwendenden Einlegeteile kann eine entsprechende Konfiguration geschaffen werden. Ferner kann eine Variation durch Wahl "blinder" Einlegeteile erfolgen, die gesperrt sind und keinen Durchgangsöffnung aufweisen.

Gemäß einer weiteren Ausgestaltung des Verfahrens umfasst das Formen des Trägerteils ferner zumindest einen der folgenden Schritte:
- Einbringen eines unter Druck stehenden thermoplastischen Werkstoffs, insbesondere eines verstärkten thermoplastischen Spritzgusswerkstoffs, in das Formwerkzeug,
- Einbringen eines unter Druck stehenden Metallwerkstoffs, insbesondere eines Druckgusswerkstoffs, in das Formwerkzeug, und
   - Einbringen eines unter geringem Druck stehenden Metallwerkstoffs, insbesondere eines Schwerkraftgusswerkstoffs, in das Formwerkzeug.

Üblicherweise stehen Werkstoffe bei Druckgussvorgängen unter hohem Druck. Dagegen stehen die Werkstoffe beim Schwerkraftgießen nur unter einem geringen bzw. unter gar keinem Überdruck. Die Begriffe "Druckguss" und "Schwerkraftguss" stehen jeweils für hinreichend deutlich definierte Verfahren, die als solches bekannt sind, so dass im Hinblick auf konkrete Verfahrensparameter keine weiteren Ausführungen erforderlich sind. Dasselbe gilt auch für den Begriff "Spritzguss".

Je nach genutztem Gussverfahren kann sich eine zumindest teilweise stoffschlüssige Verbindung zwischen dem Trägerteil und dem Einlegeteil ergeben. Es kann jedoch stets eine feste Verbindung bewirkt werden, die nicht ohne weiteres lösbar ist. Schon aufgrund der (mikroskopischen) Oberflächenstruktur der Einlegeteile kann von einer ausgezeichneten hochfesten Verbindung ausgegangen werden.

Die Nutzung von Spritzgusswerkstoffen bietet sich insbesondere dann an, wenn die erforderlichen Kanäle für die zu übertragenden Fluide vollständig oder nahezu vollständig durch die rohrartig gestalteten Einlegeteile ausgebildet werden.

Gemäß einer weiteren Ausgestaltung des Verfahrens umfasst das Formen des Trägerteils im Gusswerkzeug ferner Folgendes:
- Ausbilden zumindest einer Umfangsnut am Trägerteil, in die beim fertigen Stator ein Kanal mündet, der zumindest abschnittsweise durch das Einlegeteil ausgebildet ist.

Wie vorstehend bereits erwähnt, erlaubt die gießende Fertigung des Trägerteils eine endkonturnahe Gestaltung. Neben der zumindest einen Umfangsnut, die auch als Ringkanal bezeichnet werden kann, können auch umlaufende Nuten für Dichtungen, Leitungen für Lecköl und ähnliche Gestaltelemente vollständig oder zumindest endkonturnah bereits durch das Urformen bereitgestellt werden.

Das Bauteil betreffend wird die Aufgabe der Erfindung durch ein modular gefertigtes Bauteil für eine fluidische Drehdurchführung, insbesondere durch einen modular gefertigten Stator, gelöst, wobei das Bauteil Folgendes aufweist:
- zumindest einen sich abschnittsweise axial erstreckenden Kanal, der einen Festanschluss-Bereich und einen Drehanschluss-Bereich des Bauteils miteinander verbindet, wobei der zumindest eine Kanal zumindest abschnittsweise durch ein umgossenes rohrartiges Einlegeteil gebildet ist, und
- ein urformend hergestelltes Trägerteil aus einem Gusswerkstoff, das den zumindest einen Kanal zumindest abschnittsweise umgibt, und an dem axiale und radiale Funktionsflächen des Bauteils ausgebildet sind,
wobei das Bauteil zur Variantenbildung eine Mehrzahl von rohrartigen Einlegeteilen umfasst, die in das Trägerteil eingebettet sind, und die eine Mehrzahl von Kanälen definieren, wobei das Bauteil eine gewünschte Anschlusskonfiguration aufweist, wobei die Kanäle wahlweise gesperrt oder freigegeben sind, um die Anschlusskonfiguration zu definieren.

Auch auf diese Weise wird die Aufgabe der Erfindung vollständig gelöst.

Bei einem modular gefertigten Bauteil im Sinne der vorliegenden Offenbarung handelt es sich um ein Bauteil, das nicht monolithisch bzw. nicht einstückig gefertigt, sondern aus einem Verbund mehrerer Komponenten gebildet ist. Mit anderen Worten kann das Bauteil auf Basis eines Baukastens gebildet sein, wobei die Kanäle zumindest abschnittsweise durch vorgefertigte Rohre gebildet werden, die vom einen Gusswerkstoff umgeben, in ihrer gewünschten Lage und Orientierung fixiert und mit dem Trägerteil verbunden werden, das im Wesentlichen oder vorzugsweise sogar vollständig durch den Gusswerkstoff gebildet wird.

Die axialen und radialen Funktionsflächen können insbesondere durch spanende Bearbeitung des urformend endkonturnah hergestellten Trägerteils erzeugt werden. Der sich zumindest abschnittsweise axial erstreckende Kanal weist zumindest eine axiale Richtungskomponente auf. Somit erstrecken sich auch "schräge" Kanäle zumindest abschnittsweise axial aus.

Vorzugsweise erstreckt sich der zumindest eine Kanal abschnittsweise axial und abschnittsweise radial. Weiter bevorzugt bildet das umgossene rohrartige Einlegeteil zumindest einen Teil des axialen Abschnitts und einen Teil des radialen Abschnitts des Kanals.

Beispielhaft kann der Festanschluss-Bereich bei einer Stirnfläche des Bauteils vorgesehen sein. Ferner kann der Drehanschluss-Bereich beispielhaft bei einem Umfangsbereich des Bauteils vorgesehen sei, in dem dieses mit einem Rotor gekoppelt ist. Eine umgekehrte Zuordnung ist jedoch ohne weiteres denkbar. Es sind auch Drehdurchführungen bekannt, die Statoren aufweisen, bei denen sowohl der Festanschluss-Bereich als auch der Drehanschluss-Bereich am Umfang des Bauteils vorgesehen sind, wobei jedoch der Festanschluss-Bereich und der Drehanschluss-Bereich in diesem Fall axial voneinander beabstandet sind. Grundsätzlich ist es auch vorstellbar, sowohl den Drehanschluss-Bereich als auch den Festanschluss-Bereich (radial versetzt zueinander) an einer Stirnfläche oder Stirnseite des Bauteils auszubilden.

Ein modular gefertigtes Bauteil gemäß der oben genannten Ausgestaltung kann eine Vielzahl von Kanälen umfassen, die durch eine entsprechende Vielzahl von Einlegeteilen gebildet sind. Zumindest einige der Kanäle können verschlossen sein.

Zur Variantenbildung umfasst das Bauteil eine Mehrzahl von rohrartigen Einlegeteilen, die in das Trägerteil eingebettet sind, und die eine Mehrzahl von Kanälen definieren, wobei das Bauteil eine gewünschte Anschlusskonfiguration aufweist, wobei die Kanäle wahlweise gesperrt oder freigegeben sind, um die Anschlusskonfiguration zu definieren.

Entsprechende Kanäle können beispielhaft durch spanende Bearbeitung freigegeben werden, indem etwa radiale Bohrungen in das Verbundgussteil eingebracht werden. Alternativ oder zusätzlich ist es vorstellbar, Verschlusselemente (Stopfen, Schrauben oder Ähnliches) vorzusehen, um bereits vorhandene Zugänge zu den Kanälen und/oder Einlegeteilen selektiv zu verschließen.

Auf diese Weise kann mit geringem Aufwand auf Basis einer Basiskonfiguration oder einer überschaubaren Anzahl von Basiskonfigurationen eine Vielzahl von Varianten bereitgestellt werden.

Gemäß einer weiteren Ausgestaltung des Bauteils ist das zumindest eine Einlegeteil als Rohr auf Basis eines Metallwerkstoffs ausgebildet, wobei das Trägerteil aus einem gießbaren Werkstoff gebildet ist, der eine geringere Festigkeit als der Metallwerkstoff des zumindest einen Einlegeteils aufweist, und wobei der Metallwerkstoff des Einlegeteils vorzugsweise eine höhere Erweichungstemperatur oder Schmelztemperatur als der Werkstoff des Trägerteils aufweist. Auf diese Weise wird sichergestellt, dass das Urformen des Trägerteils keine nachteiligen Auswirkungen auf die Form und Funktion der durch die Einlegeteile bereitgestellten Kanäle hat.

Es ist gemäß einer weiteren Ausgestaltung grundsätzlich auch vorstellbar, die Einlegeteile beim Formen des Trägerteils im Gusswerkzeug gezielt zu kühlen. Diese Ausgestaltung macht sich zunutze, dass die Einlegeteile selbst ja rohrartig gestaltet sind. Demgemäß können die Einlegeteile gewissermaßen als ihre eigenen Kühlkanäle im Gusswerkzeug dienen. Gemäß dieser beispielhaften Ausgestaltung erfolgt beim Schritt des Formen des Trägerteils eine Kühlung des Gusswerkzeugs, wobei das Einlegeteil oder die Einlegeteile zumindest abschnittsweise als Kühlkanäle für ein Kühlfluid genutzt werden. Mit anderen Worten wird eine integrierte Kühlmittelführung ermöglicht. Dies kann die Fertigungsqualität verbessen und die Zykluszeiten verringern. Ferner kann auch die Herstellung relativ dickwandiger Bauteile durch eine derartige integrierte Kühlung vereinfacht werden.

Gemäß einer weiteren Ausgestaltung des Bauteils ist das zumindest eine Einlegeteil als Metallrohr, insbesondere als Stahlrohr gestaltet, wobei das Trägerteil aus einem Werkstoff besteht, der aus der Gruppe ausgewählt ist, die aus Folgendem besteht: Kunststoff, faserverstärkter Kunststoff, Aluminium oder eine Aluminiumlegierung, Zink oder eine Zinklegierung, Magnesium oder eine Magnesiumlegierung, Kupfer oder eine Kupferlegierung, Gusseisen, Stahl oder eine Stahllegierung. Gusseisen kann etwa Gusseisen mit Lamellengraphit (GG, GJL) oder Gusseisen mit Kugelgraphit (GGG, GJS) umfassen. Andere Legierungen sind denkbar.

Gemäß einer weiteren Ausgestaltung des Bauteils umfasst zumindest ein Einlegeteil davon einen gebogenen Rohrabschnitt, der insbesondere einen sich axial erstreckenden Abschnitt und einen sich radial erstreckenden Abschnitt des Einlegeteils miteinander verbindet. Auf diese Weise kann sich eine strömungsgünstige Gestaltung der Kanäle der Drehdurchführung ergeben. Ein derartiger gebogener Rohrabschnitt kann mittels klassischer rein spanender Bearbeitung schlichtweg nicht erzeugt werden.

Vorzugsweise kommt ein Bauteil gemäß einem der vorstehend beschriebenen Aspekte als Stator für eine fluidische Drehdurchführung zur Verwendung, insbesondere als Stator für eine hydraulische Hochdruck-Drehdurchführung. Vorzugsweise ist das Bauteil gemäß zumindest einiger Aspekte des im Rahmen dieser Offenbarung beschriebenen Verfahrens hergestellt.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine seitliche Teilschnittansicht einer Ausgestaltung einer Drehdurchführung, die einen Stator und einen Rotor umfasst, zur Veranschaulichung grundsätzlicher funktionaler Zusammenhänge;
- Fig. 2: eine perspektivische Schnittansicht eines Stators für eine Drehdurchführung, der konventionell gefertigt ist;
- Fig. 3: eine perspektivische Schnittansicht eines Verbundgussteils, auf dessen Basis ein Stator für eine Drehdurchführung gemäß einer Ausgestaltung der vorliegenden Offenbarung erzeugbar ist;
- Fig. 4, 5 und 6: stark vereinfachte schematische Ansichten zur Veranschaulichung verschiedener Fertigungsstufen bei der Herstellung eines Stators für eine Drehdurchführung auf Basis eines Verbundgussteils, gemäß einem Aspekt der vorliegenden Offenbarung;
- Fig. 7, 8 und 9: stark vereinfachte schematische Ansichten zur Veranschaulichung verschiedener Fertigungsstufen bei der Herstellung eines Stators für eine Drehdurchführung auf Basis eines Verbundgussteils, gemäß einem weiteren Aspekt der vorliegenden Offenbarung;
- Fig. 10: eine perspektivische Ansicht einer Anordnung rohrartiger Einlegeteile zur Bildung eines Verbundgussteils, auf dessen Basis ein Bauteil einer Drehdurchführung erzeugbar ist;
- Fig. 11: eine perspektivische Ansicht eines Verbundgussteils, das auf Basis der Anordnung gemäß Fig. 10 durch Umgießen oder Umspritzen erzeugbar ist;
- Fig. 12: ein schematisches Blockschaltbild zur Veranschaulichung eines Verfahrens zur Herstellung eines Stators für eine Drehdurchführung; und
- Fig. 13: ein Blockschaltbild zur Veranschaulichung einer weiteren Ausgestaltung eines Verfahrens zur Herstellung eines Stators für eine Drehdurchführung.

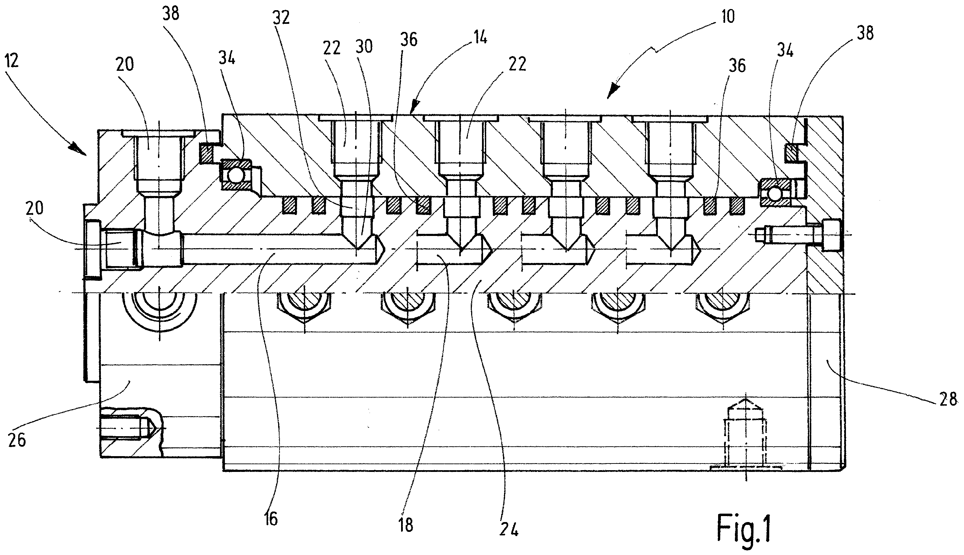

Fig. 1 zeigt in schematischer Darstellung eine seitliche Teilschnittansicht einer Drehdurchführung, die insgesamt mit 10 bezeichnet ist. Drehdurchführungen 10 kommen allgemein bei industriellen Anlagen und Maschinen zur Anwendung, bei denen Fluide, insbesondere Hydraulikfluide, zwischen Teilen zu übertragen sind, die relativ zueinander verdrehbar bzw. verschwenkbar gelagert sind.

Beispielhafte Anwendungen für die Drehdurchführung 10 können sich in der Automatisierungstechnik, in der Robotik und bei ähnlichen industriellen Anwendungen ergeben. Daneben können sich Anwendungen auf dem Gebiet der Mobilhydraulik, insbesondere bei mobilen Arbeitsmaschinen, wie etwa Baggern, Radladern, landwirtschaftlichen Maschinen sowie entsprechenden Anbauteilen ergeben.

Die Drehdurchführung 10 weist einen Stator 12 und einen Rotor 14 auf, die relativ zueinander verdrehbar sind. Der Stator 12 kann allgemein als gestellfestes Bauteil bezeichnet werden. Der Rotor 14 ist relativ zum Stator 12 verdrehbar bzw. verschwenkbar an diesem gelagert. Es versteht sich, dass je nach Wahl des Bezugssystems grundsätzlich auch eine umgekehrte Zuordnung der Begriffe Stator und Rotor vorgenommen werden kann. Im Stator 12 sind Kanäle 16, 18 zur Übertragung des Fluids zwischen dem Stator 12 und dem Rotor 14 ausgebildet. Die Kanäle 16, 18 stellen eine Verbindung zwischen einem jeweiligen Stator-Anschluss 20 sowie einem entsprechenden RotorAnschluss 22 her. In Fig. 1 sind verschiedene Kanäle 16, 18 des Stators 12 aus Veranschaulichungsgründen in einer (Schnitt-)Ebene dargestellt. Es versteht sich, dass die Kanäle 16, 18 usw. eigentlich radial und/oder winklig zueinander versetzt angeordnet bzw. verteilt sind.

Der Stator 12 ist zylindrisch gestaltet und weist einen sich in einer Längsrichtung erstreckenden Schaft 24 auf. An einem Ende des Schafts 24 ist ein Flansch 26 ausgebildet, der auch als Anschlussflansch bezeichnet werden kann. Am Flansch 26 sind beispielhaft axiale und/oder radiale Anschlüsse 20 des Stators 12 angeordnet. Je nach aktuellem Verwendungszweck kann ein jeweiliger der Anschlüsse 20 gesperrt oder freigeben werden.

Am Ende des Schafts 24, das dem Flansch 26 abgewandt ist, ist eine Abschlussplatte 28 vorgesehen, die beispielhaft am Schaft 24 durch Schraubverbindungen oder ähnliche Verbindungselemente befestigt werden kann. Zwischen dem Flansch 26 und der Abschlussplatte 28 ist der Rotor 14 am Stator 12 aufgenommen. Der Rotor 14 ist demgemäß etwa hohlzylindrisch gestaltet.

Die Kanäle 16, 18 bzw. die durch die Kanäle 16, 18 bereitgestellten Pfade für das zu übertragende Fluid münden jeweils über Öffnungen 30 in Umfangsnuten 32, die auch als Ringkanäle bezeichnet werden können. Die Umfangsnuten 32 stellen sicher, dass eine (Fluid-)Verbindung zwischen dem Stator 12 und dem Rotor 14 besteht, unabhängig von der aktuellen Relativ(dreh)lage zwischen dem Stator 12 und dem Rotor 14.

Somit kann das zu übertragende Fluid unabhängig von der aktuellen Relativlage zwischen dem Stator 12 und dem Rotor 14 ungehindert zwischen dem Statoranschluss 20 und dem Rotoranschluss 22 strömen.

Ferner ist in Fig. 1 mit 34 eine Lagerung zwischen dem Stator 12 und dem Rotor 14 angedeutet, die etwa ein erstes Lager 34 und ein zweites Lager 34 umfasst, die jeweils einander abgewandten Enden des Schafts 24 zugeordnet sind. Die Lager 34 erlauben die Relativverdrehung zwischen dem Rotor 14 und dem Stator 12.

Ferner ist eine Dichtungsanordnung vorgesehen, die radiale Dichtungen 36 und axiale Dichtungen 38 umfasst. Gemäß zumindest einiger Ausgestaltungen ist die Drehdurchführung 10 für hydraulische Hochdruckanwendungen geeignet, bei denen das zu übertragende Fluid zumindest zeitweise unter hohem Druck steht, dies kann Drücke von mehreren 100 bar umfassen.

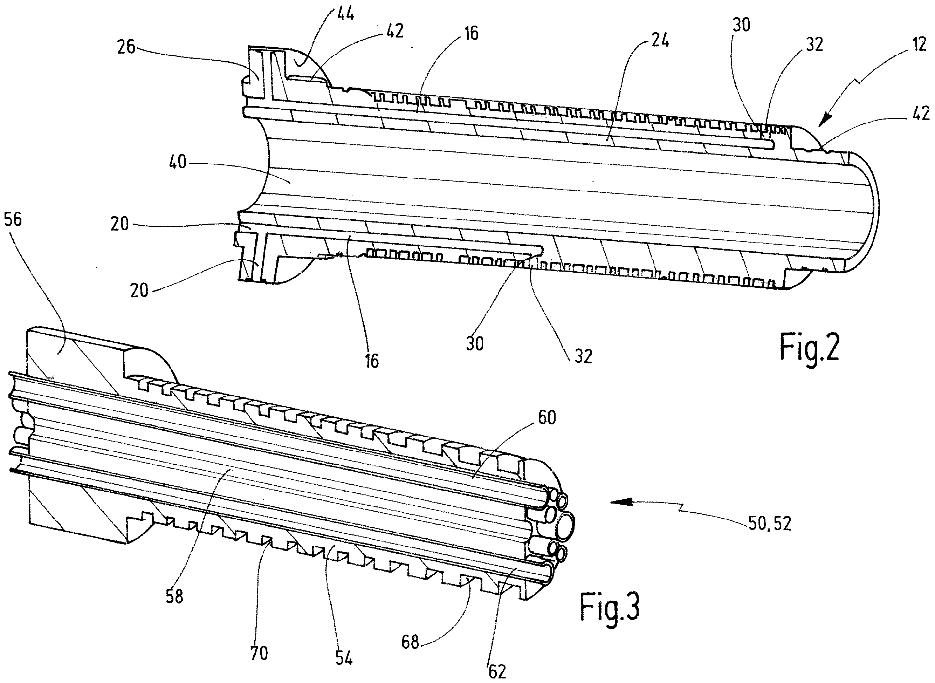

Fig. 2 veranschaulicht anhand einer perspektivischen Schnittansicht eine konventionelle Ausgestaltung eines Stators 12 für eine Drehdurchführung 10, der der Gestaltung gemäß Fig. 1 zumindest ähnlich ist.

Der Stator 12 gemäß Fig. 2 weist in grundsätzlich bereits vorstehend beschriebener Weise einen Schaft 24 und einen Flansch 26 auf. Ferner ist der Stator 12 mit einer zentralen Ausnehmung 40 versehen, die etwa als Durchgangsloch gestaltet ist. Daneben ist der Stator 12 mit einer Mehrzahl von Kanälen 16 versehen, die sich zwischen einem jeweiligen Statoranschluss 20 sowie einer Mündung oder Öffnung 30 erstrecken, und die in entsprechende Ringkanäle oder Umfangsnuten 32 münden. Beim Flansch 26 kann wiederum je nach tatsächlichen Einsatzbedingungen ein axialer oder radialer Anschluss 20 gewählt werden. Es versteht sich, dass der Stator 12 gemäß Fig. 2 mehr als lediglich zwei Kanäle 16, 18 aufweisen kann. Ein wesentlicher Abschnitt der Kanäle 16, 18 wird durch sich axial erstreckende Bohrungen gebildet, die beträchtliche Ausmaße bzw. ein sehr hohes Längen-Durchmesser-Verhältnis aufweisen können. Derartige Bohrungen werden allgemein auch als Tieflochbohrungen bezeichnet. Diese Bohrungen sind aufwendig zu fertigen.

Weitere Gestaltelemente des Stators 12 gemäß Fig. 2 sind Lagerflächen 42 für Lager 34, vergleiche auch Fig. 1. Daneben ist beispielhaft beim Flansch 26 mit 44 eine Schulter angedeutet. In ähnlicher Weise kann auch eine axiale Dichtfläche, die zur axialen Abdichtung beiträgt, oder eine axiale Anschlagfläche gestaltet sein. Insgesamt zeigt sich, dass der Stator 12 gemäß Fig. 2 nur mit einem hohen Zerspanungsaufwand hergestellt werden kann. Dies führt insbesondere bei der Mittelserien- oder Großserienfertigung zu einem hohen Aufwand. Insbesondere lassen sich keine wesentlichen Skaleneffekte erzielen, da der Stator 12 stets vollständig oder zumindest weitgehend spanend hergestellt werden muss.

Gemäß zumindest einigen Aspekten der vorliegenden Offenbarung wird dieser Nachteil überwunden, indem ein modular gefertigtes Bauteil vorgeschlagen wird, das den Zerspanungsaufwand deutlich reduziert.

Fig. 3 zeigt ein entsprechendes Verbundgussteil 52, das etwa einem Zwischenprodukt bei der Herstellung eines solchen Stators 50 entsprechen kann. Der in Fig. 3 veranschaulichte Zustand des Verbundgussteils 52 entspricht beispielhaft einem urgeformten Zustand, an den sich etwa eine Nachbearbeitung anschließen kann.

Ein Stator 50, der auf Basis des Verbundgussteils 52 erzeugbar ist, weist in grundsätzlich bekannter Weise einen sich in einer Längsrichtung erstreckenden Schaft 54 auf. Ferner kann ein Flansch 56 vorgesehen sein, der sich etwa an einem Ende des Schafts 54 an diesen anschließt. Auch der Stator 50 kann mit einer mittigen oder zentralen Ausnehmung 58 versehen sein.

Darüber hinaus ist der Stator 50 jedoch mit einer Mehrzahl von Einlegeteilen 60, 62 versehen, die im vorliegenden Beispiel gemäß Fig. 3 etwa als sich durchgehend axial erstreckende Einlegeteile 60, 62 ausgebildet sind. Diese können beispielsweise etwa ringartig oder revolverartig um ein Zentrum des Stators 50 angeordnet sein.

Die Einlegeteile 60, 62 sind rohrartig gestaltet. Die Einlegeteile 60, 62 können zumindest Abschnitte entsprechender Kanäle des Stators 50 ausbilden. Dies wird nachfolgend näher erläutert.

Das Verbundgussteil 52 gemäß Fig. 3 ist ferner mit Ringkanälen oder Umfangsnuten 68, 70 versehen, die an einem Außenumfang des Schafts 54 angeordnet sind. Die Umfangsnuten 68, 70 können einerseits als Aufnahme für Dichtelemente ausgebildet sein. Ferner können die Umfangsnuten 68, 70 jedoch Teil eines Kanals zur Übertragung von Fluiden zwischen dem Stator 50 und einem entsprechenden Rotor 14 (vergleiche Auch Fig. 1) ausgebildet sein, die relativ zueinander verdrehbar oder verschwenkbar sind.

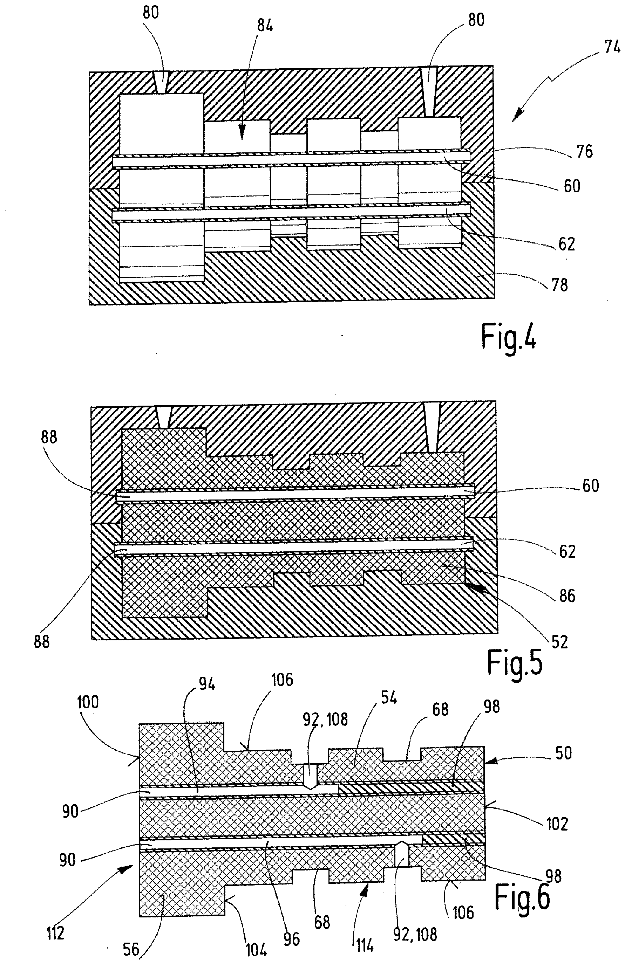

Die Herstellung des Stators 50 auf Basis eines Verbundgussteils 52 wird nachfolgend anhand der Fig. 4 bis 6 näher veranschaulicht.

Die Fig. 4 bis 6 veranschaulichen Fertigungsschritte bei der Herstellung des Stators 50. Fig. 4 zeigt in schematisch stark vereinfachter Weise ein Formwerkzeug 74, das etwa auch als Gusswerkzeug oder Kokille bezeichnet werden kann. Das Formwerkzeug 74 weist beispielhaft eine erste Formhälfte 76 und eine zweite Formhälfte 78 auf. In das Formwerkzeug 74 sind rohrartige Einlegeteile 60, 62 eingebracht. Die Einlegeteile 60, 62 können in definierter Weise und Orientierung im Formwerkzeug 74 aufgenommen sein. Vorstellbar ist auch ein Einlegen eines vormontierten oder komplett montierten Paketes, bei dem die rohrartige Einlegeteile 60, 62 bereits zueinander fixiert sind. Ein solches Rohrpaket kann eine Mehrzahl von Rohren und entsprechend angepasste Halter aufweisen, die die Rohre in ihrer Relativlage zueinander fixieren.

Das Formwerkzeug 74 definiert eine Kavität 84. Über Speiseleitungen 80 kann ein Gusswerkstoff, insbesondere Gusseisen oder Ähnliches, der Kavität 84 zugeführt werden, um die Kavität 84 auszufüllen. Auf diese Weise wird in der Kavität 84 ein Trägerteil 86 ausgebildet. Ein Zustand, in dem die Kavität 84 mit dem Gusswerkstoff befüllt ist, wird in Fig. 5 schematisch stark vereinfacht dargestellt. Das Trägerteil 86 füllt die Kavität 84 aus und umschließt die im Formwerkzeug 74 aufgenommenen Einlegeteile 60, 62 zumindest abschnittsweise. Jedoch ist es bevorzugt, wenn die Anordnung der Einlegeteile 60, 62 im Formwerkzeug 74 derart erfolgt, dass der Gusswerkstoff nicht in die Einlegeteile 60, 62 eindringen kann. Dies kann beispielsweise dadurch bewirkt werden, dass die Einlegeteile jeweils einen definierten Überstand 88 aufweisen, der nicht vom Trägerteil 86 bzw. vom Gusswerkstoff, der das Trägerteil 86 bildet, kontaktiert werden kann.

Insgesamt kann somit durch das Gießen des Trägerteils 86 das Verbundgussteil 52 erzeugt werden, das das Trägerteil 86 und zumindest ein Einlegeteil 60, 62, vorzugsweise eine Mehrzahl entsprechender Einlegeteile 60, 62, aufweist. Nach dem Erstarren des Gusswerkstoffs können die Formhälften 76, 78 geöffnet werden, so dass das Verbundgussteils 52 zur weiteren Bearbeitung zur Verfügung steht. Das Verbundgussteil 52 ist an seinem Außenumfang im Wesentlichen rotationssymmetrisch gestaltet. Vorzugsweise umfasst die weitere Bearbeitung des Verbundgussteils 52 zur Herstellung des Stators 50 jedoch gerade nicht das Einbringen langer oder überlanger sich axial erstreckender Bohrungen. Diese werden vorzugsweise bereits durch die Einlegeteile 60, 62 abgebildet.

Fig. 6 veranschaulicht wiederum in schematisch stark vereinfachter Weise eine Ausgestaltung des Stators 50, der auf Basis des Verbundgussteils 52 durch entsprechende Nachbearbeitung erzeugt wurde.

Insbesondere erfolgt die Nachbearbeitung dahingehend, dass bei den Einlegeteilen 60, 62 (vergleiche Fig. 5) jeweils eine axiale Zugangsöffnung 90 und eine radiale Zugangsöffnung 92 erzeugt wird. Zwischen den Zugangsöffnungen 90, 92 erstreckt sich beim Einlegeteil 60 ein Kanal 94. Beim Einlegeteil 62 erstreckt sich zwischen den Zugangsöffnungen 90, 92 ein Kanal 96.

Die Gestaltung der Kanäle 94, 96 gemäß Fig. 6 beinhaltet ein Verschließen der Einlegeteile 60, 62 an ihrem Ende, das den axialen Zugangsöffnungen 90 jeweils abgewandt ist. Zu diesem Zweck können etwa Verschlussstopfen oder Verschlusselemente 98 vorgesehen sein, die den gewünschten Abschnitt der Einlegeteile 60, 62 blockieren.

Stattdessen werden die Einlegeteile 60, 62 über die radialen Zugangsöffnungen 92 kontaktiert, um die Kanäle 94, 96 auszubilden. Somit kann mit geringem Bearbeitungsaufwand durch Einbringen radialer Bohrungen 108, die eine geringe Tiefe aufweisen, die gewünschte Verbindung hergestellt werden. Die Bohrungen 108 stellen jeweils eine Zugangsöffnung 90, 92 zu den Kanälen 94, 96 bereit. Vorzugsweise münden die Zugangsöffnungen 92 in entsprechende Ringkanäle oder Umfangsnuten 68, um von dort aus einen entsprechenden Rotoranschluss 22 zu kontaktieren (vergleiche Fig. 1).

Daneben umfasst die Bearbeitung des gemäß Fig. 5 erzeugten Verbundgussteils 52 ferner vorzugsweise die Erzeugung von Funktionsflächen 100, 102, 104, 106. Die Funktionsfläche 100 kann etwa durch eine Bearbeitung der Stirnfläche des Flansches 56 erzeugt werden. Dies kann beispielhaft ein Entfernen des Überstands 88 der Einlegeteile 60, 62 umfassen, vergleiche hierzu auch Fig. 5. In ähnlicher Weise kann eine Bearbeitung der der Stirnfläche 100 abgewandten Stirnfläche 102 des Schafts 54 erfolgen.

Mit 104 ist eine weitere axiale Bearbeitungsfläche des Stators 50 bezeichnet, die etwa zur axialen Abdichtung nutzbar ist. Ferner kann eine Bearbeitung Umfangsflächen oder Lagerflächen 106 betreffen, die etwa zur Aufnahme von Lagerelementen oder Ähnlichem ausgebildet sein können. Es versteht sich, dass eine Bearbeitung auch die Ringkanäle oder Umfangsnuten 68 betreffen kann. Da jedoch durch die urformende Fertigung des Trägerteils 86 im Formwerkzeug 74 bereits eine endkonturnahe Gestaltung erfolgen kann, hält sich der Nacharbeitsaufwand für den zu erzeugenden Stator 50 in Grenzen. Insbesondere sinkt das Spanvolumen deutlich. Die Bearbeitungszeit lässt sich wesentlich reduzieren.

Allgemein sind die Kanäle 94, 96 dazu ausgebildet, einen Festanschluss-Bereich 112 mit einem Drehanschluss-Bereich 114 zu verbinden. Der Festanschluss-Bereich 112 ist der Bereich des Stators 50, in dem dieser mit festen Zuleitungen/Ableitungen koppelbar ist. Der Drehanschluss-Bereich 114 ist grundsätzlich der Bereich des Stators 50, in dem dieser mit einem Rotor 14 zur Übertragung von Fluiden, insbesondere von unter Druck stehendem Hydraulikfluid koppelbar ist. Eine umgekehrte Zuordnung ist grundsätzlich vorstellbar.

Gemäß einer beispielhaften Ausgestaltung werden die Einlegeteile 60, 62 durch Stahlrohre gebildet, die etwa aus Baustahl oder ähnlichen Stahlwerkstoffen gefertigt sind. Es versteht sich, dass die Stahlrohre, die die Einlegeteile 60, 62 definieren, grundsätzlich auch aus anderen hinreichend festen, verschleißbeständigen und/oder medienresistenten Werkstoffen bestehen können.

Beispielhaft wird das Trägerteil 86 durch einen Gusseisenwerkstoff gebildet. Demgemäß kann es sich bei dem in den Fig. 4 und 5 gezeigten Formwerkzeug 74 um eine Kokille für Schwerkraftguss handeln.

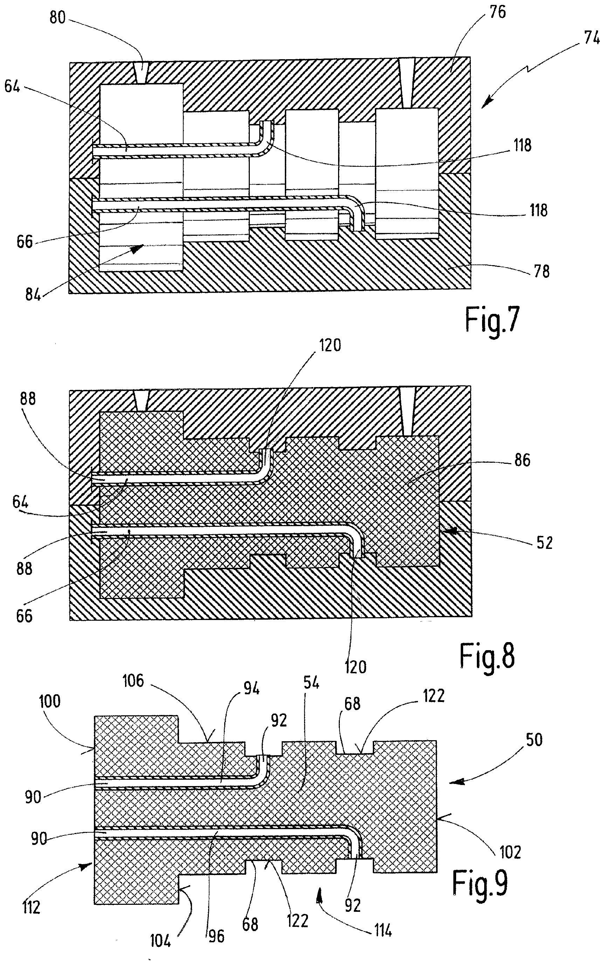

Anhand der Fig. 7 bis 9 wird eine alternative Ausgestaltung veranschaulicht, die auch die Fertigung eines Stators 50 auf Basis eines Verbundgussteils 52 betrifft. Analog zu den Gestaltungen gemäß den Fig. 4, 5 und 6 zeigt Fig. 7 zunächst in stark vereinfachter schematischer Darstellung ein Formwerkzeug 74 mit Formhälften 76 und 78. Im Formwerkzeug 74 sind Einlegeteile 64, 66 aufgenommen, die grundsätzlich rohrartig oder rohrabschnittsartig gestaltet sind. Im Gegensatz zur Gestaltung der Einlegeteile 60, 62 gemäß den Fig. 4 bis 6 sind die Einlegeteile 64, 66 gemäß den Fig. 7, 8 und 9 jedoch mit einer Biegung 118 versehen. Die Biegung 118 kann etwa eine 90°-Biegung umfassen. In bekannter Weise können die Einlegeteile 64, 66 definiert in ihre gewünschten Relativzuordnung im Formwerkzeug 74 angeordnet werden. Es versteht sich, dass grundsätzlich auch eine Kombination aus geradlinigen Einlegeteilen 60, 62 gemäß Fig. 4 und gebogenen oder gekrümmten Einlegeteilen 64, 66 gemäß Fig. 7 vorstellbar ist.

Fig. 8 veranschaulicht ein Zustand, in dem ein Gusswerkstoff, etwa ein Gusseisenwerkstoff, in das Formwerkzeug 74 eingebracht wurde. In bekannter Weise füllt der Gusswerkstoff die Kavität 84 aus und umschließt die Einlegeteile 64, 66 zumindest abschnittsweise. Auf diese Weise wird ein urformend gefertigtes Trägerteil 86 ausgebildet. Wiederum ist es von Vorteil, wenn ein Eindringen des Gusswerkstoffes in die Einlegeteile 64, 66 unterbunden wird. Zu diesem Zweck ist ein axialer Überstand 88 vorgesehen. Ferner kann ein radialer Überstand 120 vorgesehen sein, so dass die Einlegeteile 64, 66 entsprechend über einen Außenumfang des Trägerteils 86 hinausragen.

Fig. 9 veranschaulicht wiederum einen fertig bearbeiteten Zustand eines Stators 50, der auf Basis des gemäß Fig. 8 erzeugbaren Verbundgussteils 52 hergestellt ist. In bekannter Weise kann eine Bearbeitung von Funktionsflächen 100, 102, 104, 106 erfolgen, um gewünschte Funktionen des Stators 50 bereitzustellen. Demgemäß kann etwa im Festanschluss-Bereich 112 eine jeweilige Zugangsöffnung 90 für Kanäle 94, 96, die durch die Einlegeteile 64, 66 definiert werden, erzeugt werden.

Ein Vorteil gegenüber der Ausgestaltung gemäß den Fig. 4, 5 und 6 besteht darin, dass die Einlegeteile 64, 66 gemäß den Fig. 7, 8 und 9 aufgrund Ihrer gebogenen Abschnitte 118 den Festanschluss-Bereich 112 und den Drehanschluss-Bereich 114 direkt miteinander verbinden können. Radiale Zugangsöffnungen 92 der Kanäle 94, 96 werden direkt durch die rohrartig gestalteten Einlegeteile 64, 66 ausgebildet. Eine entsprechende bearbeitete Fläche am Grund der Ringkanäle oder Umfangsnuten 68, in die die Kanäle 94, 96 münden, ist in Fig. 9 mit 122 angedeutet.

Die Variante gemäß den Fig. 7, 8 und 9 erlaubt gegenüber der anhand der Fig. 4, 5 und 6 veranschaulichten Ausgestaltung eine weitere Reduzierung des Nachbearbeitungsaufwands. Insbesondere müssen keine separaten Verschlusselemente 98 vorgesehen werden. Demgegenüber ist die Gestaltung gemäß den Fig. 4, 5 und 6 grundsätzlich flexibler, da eine radiale Kontaktierung durch die Bohrungen 108, 106 selektiv erzeugt werden kann.

Auch die Gestaltung gemäß den Fig. 7, 8 und 9 kann ein Trägerteil 86 aus einem Gusseisenwerkstoff umfassen, in das rohrartig gestaltete Einlegeteil 64, 66 aus Stahlwerkstoffen eingebettet sind. Es versteht sich, dass die anhand der Fig. 4 bis 9 veranschaulichten Ausgestaltungen lediglich schematisch stark vereinfacht dargestellt sind. Es versteht sich, dass die veranschaulichten Prinzipien und Aspekte jedoch ohne weiteres auf komplex gestaltete Statoren übertragen werden können, vergleiche etwa die Gestaltung des Stators 12 gemäß Fig. 2.

Neben dem Schwerkraftguss eignet sich zur Erzeugung des Verbundbauteils 52 auf Basis des Trägerteils 86, das die Einlegeteile 60, 62, 64, 66 zumindest teilweise umschließt bzw. in sich einbettet, grundsätzlich auch Spritzguss oder Druckguss. Mittels Spritzguss können etwa thermoplastische Kunststoffe, vorzugsweise faserverstärkte Kunststoffe, das Trägerteil 86 ausbilden. Druckguss beinhaltet ein unter Druck Setzen und Injizieren von Druckgusswerkstoffen, wie etwa Aluminium bzw. Aluminiumlegierungen, Magnesium bzw. Magnesiumlegierungen und Ähnlichem. Auch bei derartig gestalteten Trägerteilen kann der Aufwand für die Nachbearbeitung, insbesondere für eine spanende Nachbearbeitung, deutlich reduziert werden.

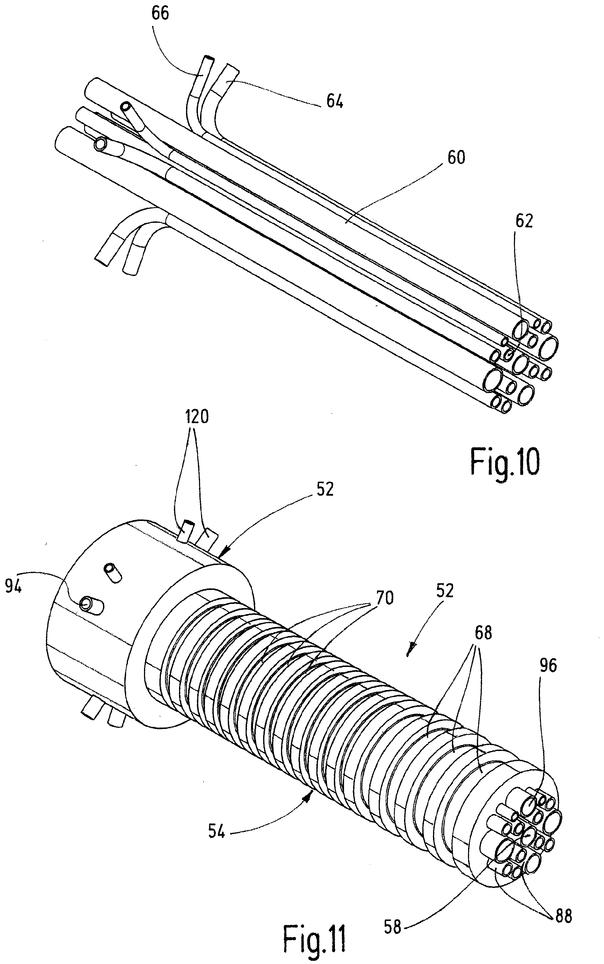

Anhand der Fig. 10 und 11 wird eine weitere alternative Ausgestaltung veranschaulicht, die ebenso eine modulare Fertigung eines Stators 50 auf Basis eines Verbundgussteils 52 betrifft.

Fig. 10 zeigt eine Anordnung von Einlegeteilen 60, 62, 64, 66. Es sind sich im Wesentlichen geradlinig erstreckende Einlegeteile 60, 62 vorhanden, die insbesondere parallel zu einer Axialrichtung ausgerichtet sind. Die Einlegeteile 60, 62 weisen beispielhaft verschiedene Abmessungen, etwa Durchmesser, auf. Ferner sind abgewinkelte bzw. gebogene Einlegeteile 64, 66 vorhanden, die beispielsweise einen sich axial erstreckenden Abschnitt und einen sich radial erstreckenden Abschnitt umfassen. Die Einlegeteile 64, 66 weisen beispielhaft verschiedene Abmessungen, etwa Durchmesser, auf. Gemäß der anhand der Fig. 10 veranschaulichten Ausgestaltung ist jeweils eine Mehrzahl der Einlegeteile 60, 62, 64, 66 vorgesehen. Eine entsprechende Vielzahl von Kanälen kann auf Basis dieser Konfiguration erzeugt werden. Die Einlegeteile 60, 62, 64, 66 sind definiert angeordnet, orientiert und zueinander ausgerichtet. Die Einlegeteile 60, 62, 64, 66 sind zueinander axial ausgerichtet. Die Einlegeteile 60, 62, 64, 66 weise eine definierte konzentrische Anordnung auf.

Es versteht sich, dass die Gestaltung gemäß Fig. 10 lediglich eine beispielhafte Anordnung betrifft. Allgemein können die Einlegeteile 60, 62, 64, 66 eine definierte 3D-Erstreckung aufweisen. So können zumindest einige der Einlegeteile 60, 62, 64, 66 zumindest abschnittsweise schräg zu einer vorgegebenen Haupt-Längserstreckungsrichtung des zu erzeugenden Stators 50 orientiert sein. Ferner ist eine Mehrzahl von Biegungen vorstellbar, wobei die Biegungen zueinander winklig versetzt sein können. Ferner ist es vorstellbar, Kröpfungen und ähnliche Gestaltelemente vorzusehen.

Fig. 11 veranschaulicht einen Zustand des Verbundgussteils 52 nach dem Umgießen der Anordnung gemäß Fig. 10 mit dem Gusswerkstoff. Das Gießen erfolgt in einer Form 74, die hier jedoch nicht gezeigt ist. Nach dem Gießen sind die Einlegeteile 60, 62, 64, 66 in ihrer Relativlage zueinander fixiert und können Kanäle 94, 96 eines Stators 50 ausbilden. Ferner sind Umfangsnuten 68, 70 geformt, die beispielweise durch die Gestaltung der Form 74 definiert sein können. Die Umfangsnuten 68, 70 können zur Kontaktierung der Einlegeteile 60, 62, 64, 66 genutzt werden, um die Kanäle 94, 96 auszubilden, vgl. hierzu auch Fig. 3 und Fig. 6.

Die Einlegeteile 60, 62, 64, 66 weisen definierte axiale und/oder radiale Überstände 88, 120 auf. Es versteht sich, dass auf Basis des Zustands des Verbundgussteils 52 gemäß Fig. 11 noch Nachbearbeitungsschritte folgen können, insbesondere spanende Nachbearbeitungsschritte. Dies kann ein Bearbeiten der Überstände 88, 120 beinhalten. Ferner kann das Bearbeiten eine radiale Kontaktierung zumindest eines der Einlegeteile 60, 62, 64, 66 durch eine definierte radiale Bohrung betreffen. Zumindest eines der Einlegeteile 60, 62, 64, 66 kann eine mittige, zentrale Ausnehmung 58 definieren.

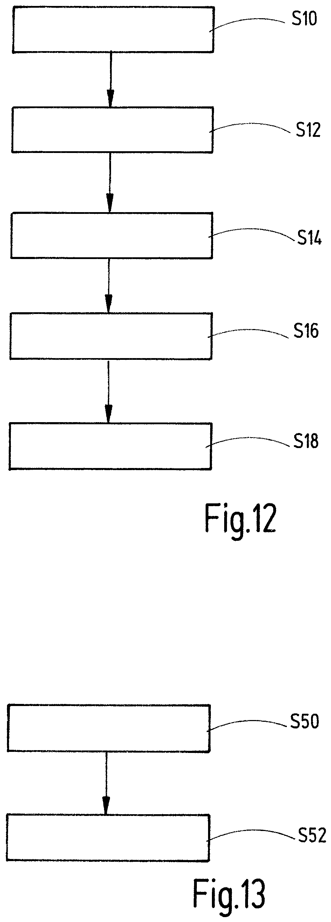

Anhand eines in Fig. 12 gezeigten schematisch stark vereinfachten Blockdiagramms wird ein beispielhaftes Verfahren zur Herstellung eines Stators für eine Drehdurchführung veranschaulicht, das sich verschiedene Prinzipien der vorliegenden Offenbarung zu Nutze macht.

Das Verfahren umfasst einen Schritt S10, der die Bereitstellung zumindest eines zumindest abschnittsweise rohrartig gestalteten Einlegeteils umfasst. Vorzugsweise werden beim Schritt S10 mehrere derartige Einlegeteile bereitgestellt. Es sind Einlegeteile vorstellbar, die sich im Wesentlichen geradlinig erstrecken. Jedoch sind auch Einlegeteile vorstellbar, die zumindest eine Biegung aufweisen oder gar zweidimensional oder dreidimensional gekrümmt verlaufen.

Es schließt sich ein Schritt S12 an, der ein Anordnen des Einlegeteils bzw. der Einlegeteile in einem Gusswerkzeug beinhaltet. Bei dem Gusswerkzeug kann es sich etwa um ein Werkzeug für Schwerkraftguss, Druckguss oder Spritzguss handeln. Vorzugsweise ist das Gusswerkzeug bzw. dessen Form derart gestaltet, dass die Einlegeteile mit hoher Genauigkeit im Gusswerkzeug angeordnet werden können. Ferner erfolgt beim Schritt S12 vorzugsweise ein Abdecken der Einlegeteile, so dass bei einem sich anschließenden Gussprozess vorzugsweise kein Gusswerkstoff in die Einlegeteile eindringen kann.

Das Gießen erfolgt in einem nachgelagerten Schritt S14. Der Schritt S14 umfasst ein Einbringen eines fließfähigen Werkstoffs in eine Kavität des Gusswerkzeugs, in dem bereits das zumindest eine Einlegeteil angeordnet ist. Demgemäß kann der Gusswerkstoff das Einlegeteil zumindest abschnittsweise umschließen. Auf diese Weise kann ein Verbundgussteil erzeugt werden, bei dem ein fester Verbund aus dem Einlegeteil und dem Trägerteil vorliegt. Der Schritt S14 kann ferner ein erforderliches Abkühlen des erzeugten Verbundgussteils umfassen. Dies kann im Gusswerkzeug und/oder außerhalb des Gusswerkzeugs erfolgen.

Ein nachgelagerter Schritt S16 betrifft eine spanende oder allgemein materialabtragende Bearbeitung des Verbundgussteils. Der Schritt S16 kann beispielsweise die Bearbeitung von Funktionsflächen, etwa von Lagerflächen, Stirnflächen, Dichtflächen und Ähnlichem umfassen. Ferner kann der Schritt S16 die Ausbildung oder Einbringung radialer Zugangsöffnungen beinhalten. Auf diese Weise kann das zumindest eine Einlegeteil kontaktiert werden, um einen Kanal für ein zu übertragendes Fluid bereitzustellen.

In einem weiteren nachgelagerten Schritt S18 kann sich ein Verschließen oder Sperren zumindest eines Zugangs zum Einlegeteil anschließen. Dies kann etwa ein sich durchgehend axial erstreckendes Einlegeteil im Trägerteil betreffen, das im Schritt S16 durch eine radiale Bohrung kontaktiert wurde. Um die Funktion des Kanals zu gewährleisten und definiert bereitzustellen, kann das Ende des Kanals bzw. des Einlegeteils, das nicht benötigt wird, durch einen Stopfen oder ein ähnliches Verschlusselement verschlossen werden.

Fig. 13 veranschaulicht anhand eines weiteren stark vereinfachten Blockschaubilds eine Ausgestaltung des anhand der Fig. 12 veranschaulichten Verfahrens zur Herstellung eines Stators für eine Drehdurchführung auf Basis eines Verbundgussteils.

Je nach Gestaltung und Anordnung der Einlegeteile kann unter Nutzung lediglich einer Basiskonfiguration oder einer geringen Anzahl von Basiskonfigurationen eine Vielzahl von Varianten erzeugt werden. Das Erzeugen oder Herstellen der Basiskonfiguration erfolgt in einem Schritt S50. Dies kann etwa das Einbringen einer Mehrzahl von rohrartig gestalteten Einlegeteilen in ein Formwerkzeug betreffen. Ferner kann der Schritt S50 ein Gießen eines Trägerteils umfassen, das die Einlegeteile zumindest abschnittsweise umschließt.

In einem nachgelagerten S52 kann eine Variantenerzeugung erfolgen. Dies kann etwa ein gezieltes Sperren und/oder Freigeben entsprechender Kanäle beinhalten. Ein Freigeben von Kanälen kann etwa durch Kontaktieren mittels radial eingebrachter Bohrungen erfolgen. Ein Sperren kann etwa das Einbringen von Stopfen oder ähnlichen Verschlusselementen umfassen. Je nach gewünschter Funktion kann etwa ein Einlegeteil vollständig gesperrt werden, so dass gar keine Durchleitung des Fluids ermöglicht ist. Umgekehrt kann durch das Sperren oder Verschließen lediglich eines Abschnitts und ein definiertes Kontaktieren, etwa durch eine radial eingebrachte Bohrung, eine gewünschte Fluidführung des entsprechenden Kanals bewirkt werden.

## Patentansprüche

1. Verfahren zur Herstellung einer fluidischen Drehdurchführung (10), die einen Stator (50) umfasst, mit den folgenden Schritten:
- Bereitstellung zumindest eines zumindest abschnittsweise rohrartig gestalteten Einlegeteils (60, 62, 64, 66),
- Anordnen des zumindest einen Einlegeteils (60, 62, 64, 66) in einem Gusswerkzeug (74), und
- Formen eines Trägerteils (86) durch Einbringen eines fließfähigen Werkstoffs in das Gusswerkzeug (74), wobei das zumindest eine Einlegeteil (60, 62, 64, 66) zumindest abschnittsweise durch den fließfähigen Werkstoff umschlossen wird, und wobei das Trägerteil (86) und das zumindest eine Einlegeteil (60, 62, 64, 66) miteinander gefügt werden und ein Verbundgussteil (52) ausbilden, auf dem der Stator (50) der fluidischen Drehdurchführung (10) basiert,
**gekennzeichnet durch**
- Erzeugen einer Basiskonfiguration des Stators (50), wobei eine Mehrzahl von rohrartigen Einlegteilen (60, 62, 64, 66) vorgesehen ist, die in das Trägerteil (86) eingebettet sind, und die eine Mehrzahl von Kanälen (94, 96) definieren, und
- Erzeugen einer Variante des Stators (50) durch gezieltes Sperren und Freigeben jeweiliger Kanäle (94, 96).

2. Verfahren nach Anspruch 1, ferner aufweisend:
- spanende Bearbeitung des Verbundgussteils (52), umfassend zumindest einen der folgenden Schritte:
- Erzeugen zumindest einer axialen oder umfänglichen Funktionsfläche (100, 102, 104, 106) am Trägerteil (86), und
- Erzeugen eines Zugangs (90, 92) zu dem zumindest einen Einlegeteil (60, 62, 64, 66).

3. Verfahren nach Anspruch 1 oder 2, wobei das zumindest eine Einlegeteil (60, 62, 64, 66) als durchgängige Fluidleitung ausgebildet ist.

4. Verfahren nach einem der vorhergehenden Ansprüche, wobei der Schritt des Bereitstellens des zumindest eines Einlegeteils (64, 66) ferner Folgendes aufweist:
- Bereitstellen zumindest eines Einlegeteils (64, 66), das sich zumindest abschnittsweise axial und zumindest abschnittsweise radial erstreckt, wobei das Einlegeteil (64, 66) dazu ausgebildet ist, einen Festanschluss-Bereich (112) und einen Drehanschluss-Bereich (114) des Stators (50) miteinander zu verbinden.

5. Verfahren nach einem der vorhergehenden Ansprüche, wobei der Schritt des Bereitstellens des zumindest eines Einlegeteils (60, 62) ferner Folgendes aufweist:
- Bereitstellen zumindest eines Einlegeteils (60, 62), das sich axial erstreckt, wobei ein Zugang (90, 92) zu dem zumindest einen Einlegeteil (60, 62) durch spanende Bearbeitung erzeugt wird, insbesondere durch Erzeugen einer sich zumindest abschnittsweise radial erstreckenden Bohrung (108).

6. Verfahren nach einem der vorhergehenden Ansprüche, ferner aufweisend:
- Bereitstellen zumindest eines Verschlusselements (98), insbesondere zumindest eines Verschlusstopfens, und
- wahlweise Sperren zumindest eines Abschnitts eines Einlegeteils (60, 62, 64, 66) durch Fügen des Verschlusselements (98).

7. Verfahren nach einem der vorhergehenden Ansprüche, wobei das Formen des Trägerteils (86) ferner den folgenden Schritt umfasst:
- Einbringen eines unter Druck stehenden thermoplastischen Werkstoffs, insbesondere eines verstärkten thermoplastischen Spritzgusswerkstoffs, in das Formwerkzeug (74).

8. Verfahren nach einem der Ansprüche 1 bis 6, wobei das Formen des Trägerteils (86) ferner den folgenden Schritt umfasst:
- Einbringen eines unter Druck stehenden Metallwerkstoffs, nämlich eines Druckgusswerkstoffs, in das Formwerkzeug (74).

9. Verfahren nach einem der Ansprüche 1 bis 6, wobei das Formen des Trägerteils (86) ferner den folgenden Schritt umfasst:
- Einbringen eines unter geringem Druck stehenden Metallwerkstoffs, nämlich eines Schwerkraftgusswerkstoffs, in das Formwerkzeug (74).

10. Verfahren nach einem der vorhergehenden Ansprüche, wobei das Formen des Trägerteils (86) im Gusswerkzeug (74) ferner Folgendes umfasst:
- Ausbilden zumindest einer Umfangsnut am Trägerteil (86), in die beim fertigen Stator (50) ein Kanal (94, 96) mündet, der zumindest abschnittsweise durch das Einlegeteil (60, 62, 64, 66) ausgebildet ist.

11. Modular gefertigtes Bauteil für eine fluidische Drehdurchführung (10), insbesondere modular gefertigter Stator (50), wobei das Bauteil Folgendes ausweist:
- zumindest einen sich abschnittsweise axial erstreckenden Kanal (94, 96), der einen Festanschluss-Bereich (112) und einen Drehanschluss-Bereich (114) des Bauteils (50) miteinander verbindet, wobei der zumindest eine Kanal (94, 96) zumindest abschnittsweise durch ein umgossenes rohrartiges Einlegeteil (60, 62, 64, 66) gebildet ist, und
- ein urformend hergestelltes Trägerteil (86) aus einem Gusswerkstoff, das den zumindest einen Kanal (94, 96) zumindest abschnittsweise umgibt, und an dem axiale und radiale Funktionsflächen (100, 102, 104, 106) des Bauteils (50) ausgebildet sind,
**dadurch gekennzeichnet, dass**
das Bauteil (50) zur Variantenbildung eine Mehrzahl von rohrartigen Einlegeteilen (60, 62, 64, 66) umfasst, die in das Trägerteil (86) eingebettet sind, und die eine Mehrzahl von Kanälen (94, 96) definieren, wobei das Bauteil (50) eine gewünschte Anschlusskonfiguration aufweist, wobei die Kanäle (94, 96) wahlweise gesperrt oder freigegeben sind, um die Anschlusskonfiguration zu definieren.

12. Bauteil nach Anspruch 11, wobei das zumindest eine Einlegeteil (60, 62, 64, 66) als Rohr auf Basis eines Metallwerkstoffs ausgebildet ist, wobei das Trägerteil (86) aus einem gießbaren Werkstoff gebildet ist, der eine geringere Festigkeit als der Metallwerkstoff des zumindest eine Einlegeteils (60, 62, 64, 66) aufweist, und wobei der Metallwerkstoff des Einlegeteils (60, 62, 64, 66) vorzugsweise eine höhere Erweichungstemperatur oder Schmelztemperatur als der Werkstoff des Trägerteils (86) aufweist.

13. Bauteil nach Anspruch 11 oder 12, wobei das zumindest eine Einlegeteil (60, 62, 64, 66) als Metallrohr, insbesondere als Stahlrohr gestaltet ist, und wobei das Trägerteil (86) aus einem Werkstoff besteht, der aus der Gruppe ausgewählt ist, die aus Folgendem besteht: Kunststoff, faserverstärkter Kunststoff, Aluminium oder eine Aluminiumlegierung, Zink oder eine Zinklegierung, Magnesium oder eine Magnesiumlegierung, Kupfer oder eine Kupferlegierung, Gusseisen, Stahl oder eine Stahllegierung.

14. Bauteil nach einem der Ansprüche 11 bis 13, wobei zumindest ein Einlegeteil (60, 62, 64, 66) einen gebogenen Rohrabschnitt (118) umfasst, der insbesondere einen sich axial erstreckenden Abschnitt und einen sich radial erstreckenden Abschnitt des Einlegeteils (60, 62, 64, 66) miteinander verbindet.

15. Verwendung eines nach einem der Ansprüche 1 bis 10 hergestellten Bauteils oder eines Bauteils nach einem der Ansprüche 11 bis 14 als Stator (50) für eine fluidische Drehdurchführung (10), insbesondere für eine hydraulische Hochdruck-Drehdurchführung.

## Claims

1. A method of manufacturing a fluidic rotary union (10) comprising a stator (50), comprising the following steps:
- providing of at least one insert part (60, 62, 64, 66) that is at least sectionally tubular,
- arranging the at least one insert part (60, 62, 64, 66) in a molding tool (74), and
- forming a support part (86) by introducing a flowable material into the molding tool (74), wherein the at least one insert part (60, 62, 64, 66) is at least sectionally enclosed by the flowable material, and wherein the support part (86) and the at least one insert part (60, 62, 64, 66) are joined together and form a composite casting part (52) on which the stator (50) of the fluidic rotary union (10) is based,
**characterized by**
- forming a basic configuration of the stator (50), wherein a plurality of tubular insert parts (60, 62, 64, 66) are provided which are embedded in the support part (86) and which define a plurality of channels (94, 96), and
- forming a variant of the stator (50) by selectively blocking and enabling the respective channels (94, 96).

2. The method according to claim 1, further comprising:
- machining the composite casting part (52), comprising at least one of the following steps:
- forming at least one axial or circumferential functional surface (100, 102, 104, 106) on the support part (86), and
- forming an access (90, 92) to the at least one insert part (60, 62, 64, 66).

3. The method according to claim 1 or 2, wherein the at least one insert part (60, 62, 64, 66) is arranged as a continuous fluid line.

4. The method according to any one of the preceding claims, wherein the step of providing the at least one insert part (64, 66) further comprises the following:
- providing at least one insert part (64, 66) extending axially, at least in sections, and radially, at least in sections, wherein the insert part (64, 66) is arranged to connect a fixed connection region (112) and a rotary connection region (114) of the stator (50) to one another.

5. The method according to any one of the preceding claims, wherein the step of providing the at least one insert part (60, 62) further comprises the following:
- providing at least one axially extending insert part (60, 62),
wherein an access (90, 92) to the at least one insert part (60, 62) is formed by machining, in particular by forming a bore (108) at least sectionally extending radial.

6. The method according to any one of the preceding claims, further comprising:
- providing at least one closing element (98), in particular at least one closing plug, and
- selectively blocking at least a portion of an insert part (60, 62, 64, 66) by joining the closing element (98).

7. The method according to any one of the preceding claims, wherein the molding of the support part (86) further comprises the following step:
- introducing a thermoplastic material that is subjected to pressure, in particular a reinforced thermoplastic injection molding material, into the molding tool (74).

8. The method according to any one of claims 1 to 6, wherein the forming of the support part (86) further comprises the following step:
- introducing a metal material that is subjected to pressure, namely a die casting material, into the molding tool (74).

9. The method according to any one of claims 1 to 6, wherein the forming of the support part (86) further comprises the following step:
- introducing a metal material that is subjected to low pressure, namely a gravity casting material, into the molding tool (74).

10. The method according to any one of the preceding claims, wherein the forming of the support part (86) in the molding tool (74) further comprises the following step:
- forming at least one circumferential groove on the support part (86) into which, in the finished stator (50), a channel (94, 96) opens, which is at least sectionally formed by the insert part (60, 62, 64, 66).

11. A modular component for a fluidic rotary union (10), in particular a stator (50) manufactured in modules, the component comprising the following:
- at least one sectionally axially extending channel (94, 96) that connects a fixed connection region (112) and a rotary connection region (114) of the component (50) to one another, wherein the at least one channel (94, 96) is at least sectionally formed by a tubular insert part (60, 62, 64, 66) that is overmolded, and
- a support part (86) which is produced by primary shaping from a cast material which surrounds the at least one channel (94, 96), at least in sections, and on which axial and radial functional surfaces (100, 102, 104, 106) of the component (50) are formed,
**characterized in that**
the component (50) comprises, for forming variants, a plurality of tubular insert parts (60, 62, 64, 66) embedded in the support part (86) and defining a plurality of channels (94, 96), wherein the component (50) has a desired connecting configuration, wherein the channels (94, 96) are selectively disabled or enabled to define the connecting configuration.

12. The component according to claim 11, wherein the at least one insert part (60, 62, 64, 66) is formed as a tube based on a metal material, wherein the support part (86) is formed of a castable material which has a lower strength than the metal material of the at least one insert part (60, 62, 64, 66), and wherein the metal material of the insert part (60, 62, 64, 66) preferably has a higher softening temperature or melting temperature than the material of the support part (86).

13. The component according to claim 11 or 12, wherein the at least one insert part (60, 62, 64, 66) is arranged as a metal tube, in particular a steel tube, and wherein the support part (86) is made of a material selected from the group consisting of: plastic, fiber-reinforced plastic, aluminum or an aluminum alloy, zinc or a zinc alloy, magnesium or a magnesium alloy, copper or a copper alloy, cast iron, steel or a steel alloy.

14. The component according to any one of claims 11 to 13, wherein at least one insert part (60, 62, 64, 66) comprises a bent pipe section (118) which in particular connects an axially extending section and a radially extending section of the insert part (60, 62, 64, 66) to one another.

15. A use of a component manufactured according to any one of claims 1 to 10 or of a component according to any one of claims 11 to 14 as a stator (50) for a fluidic rotary union (10), in particular for a hydraulic high-pressure rotary union.

## Revendications

1. Procédé de fabrication d'un passage rotatif fluidique (10) qui comprend un stator (50), comprenant les étapes suivantes :
- fourniture d'au moins une pièce d'insertion (60, 62, 64, 66) de configuration au moins en partie tubulaire,
- agencement de l'au moins une pièce d'insertion (60, 62, 64, 66) dans un outil de moulage (74), et
- formation d'une partie de support (86) par introduction d'un matériau apte à s'écouler dans l'outil de moulage (74), l'au moins une pièce d'insertion (60, 62, 64, 66) étant au moins en partie enveloppée par le matériau apte à s'écouler, et la partie de support (86) et l'au moins une pièce d'insertion (60, 62, 64, 66) étant assemblées l'une à l'autre et constituant une pièce moulée composite (52) sur laquelle est basé le stator (50) du passage rotatif fluidique (10),
**caractérisé par**
- la production d'une configuration de base du stator (50), une pluralité de pièces d'insertion (60, 62, 64, 66) tubulaires étant prévues, lesquelles sont noyées dans la partie de support (86) et définissent une pluralité de canaux (94, 96), et
- la génération d'une variante du stator (50) par blocage et ouverture ciblés des canaux respectifs (94, 96).

2. Procédé selon la revendication 1, présentant en outre :
- un usinage par enlèvement de copeaux de la pièce composite (52), comprenant au moins l'une des étapes suivantes :
- production d'au moins une surface fonctionnelle axiale ou périphérique (100, 102, 104, 106) sur la partie de support (86), et
- production d'un accès (90, 92) à l'au moins une pièce d'insertion (60, 62, 64, 66).

3. Procédé selon la revendication 1 ou 2, dans lequel l'au moins une pièce d'insertion (60, 62, 64, 66) est réalisée sous forme de conduite fluidique continue.

4. Procédé selon l'une quelconque des revendications précédentes, dans lequel l'étape de fourniture de l'au moins une pièce d'insertion (64, 66) présente en outre l'étape suivante :
- fourniture d'au moins une pièce d'insertion (64, 66) qui s'étend au moins en partie axialement et au moins en partie radialement, la pièce d'insertion (64, 66) étant réalisée de manière à relier l'une à l'autre une région de raccord fixe (112) et une région de raccord pivotant (114) du stator (50).

5. Procédé selon l'une quelconque des revendications précédentes, dans lequel l'étape consistant à fournir l'au moins une pièce d'insertion (60, 62) présente en outre l'étape suivante :
- fourniture d'au moins une pièce d'insertion (60, 62) qui s'étend axialement, un accès (90, 92) à l'au moins une pièce d'insertion (60, 62) étant réalisé par usinage par enlèvement de copeaux, en particulier par production d'un alésage (108) s'étendant au moins en partie radialement.

6. Procédé selon l'une quelconque des revendications précédentes, présentant en outre :
- la fourniture d'au moins un élément de fermeture (98), en particulier d'au moins un bouchon de fermeture, et
- le blocage sélectif d'au moins une portion d'une pièce d'insertion (60, 62, 64, 66) par assemblage de l'élément de fermeture (98).

7. Procédé selon l'une quelconque des revendications précédentes, dans lequel la formation de la partie de support (86) comprend en outre l'étape suivante :
- introduction d'un matériau thermoplastique sous pression, en particulier d'un matériau de moulage par injection thermoplastique renforcé, dans l'outil de formage (74).

8. Procédé selon l'une quelconque des revendications 1 à 6, dans lequel le formage de la partie de support (86) comprend en outre l'étape suivante :
- introduction d'un matériau métallique sous pression, à savoir d'un matériau de moulage sous pression, dans l'outil de formage (74).

9. Procédé selon l'une quelconque des revendications 1 à 6, dans lequel le formage de la partie de support (86) comprend en outre l'étape suivante :
- introduction d'un matériau métallique sous faible pression, à savoir d'un matériau de moulage par gravité, dans l'outil de formage (74).

10. Procédé selon l'une quelconque des revendications précédentes, dans lequel le formage de la partie de support (86) dans l'outil de moulage (74) comprend en outre :
- la réalisation d'au moins une rainure périphérique sur la partie de support (86), dans laquelle, lorsque le stator (50) est fini, débouche un canal (94, 96) qui est réalisé au moins en partie à travers la pièce d'insertion (60, 62, 64, 66).

11. Composant fabriqué sous forme modulaire pour un passage rotatif fluidique (10), en particulier stator (50) fabriqué sous forme modulaire, le composant présentant ce qui suit :
- au moins un canal (94, 96) s'étendant en partie axialement, qui relie l'une à l'autre une région de raccord fixe (112) et une région de raccord rotatif (114) du composant (50), l'au moins un canal (94, 96) étant formé au moins en partie par une pièce d'insertion (60, 62, 64, 66) tubulaire surmoulée, et
- une partie de support (86) fabriquée par transformation primaire, constituée d'un matériau de moulage, qui entoure au moins en partie l'au moins un canal (94, 96) et sur laquelle sont réalisées des surfaces fonctionnelles axiales et radiales (100, 102, 104, 106) du composant (50),
**caractérisé en ce que**
le composant (50), pour former une variante, comprend une pluralité de pièces d'insertion tubulaires (60, 62, 64, 66) qui sont noyées dans la partie de support (86), et qui définissent une pluralité de canaux (94, 96), le composant (50) présentant une configuration de raccordement souhaitée, les canaux (94, 96) étant bloqués ou ouverts de manière sélective, afin de définir la configuration de raccordement.

12. Composant selon la revendication 11, dans lequel l'au moins une pièce d'insertion (60, 62, 64, 66) est réalisée sous forme de tube à base d'un matériau métallique, la partie de support (86) étant formée d'un matériau apte à s'écouler, qui présente une plus faible solidité que le matériau métallique de l'au moins une pièce d'insertion (60, 62, 64, 66), et dans lequel le matériau métallique de la pièce d'insertion (60, 62, 64, 66) présente de préférence une température de ramollissement ou une température de fusion plus élevée que celle du matériau de la partie de support (86).

13. Composant selon la revendication 11 ou 12, dans lequel l'au moins une pièce d'insertion (60, 62, 64, 66) est réalisée sous forme de tube métallique, en particulier sous forme de tube d'acier, et dans lequel la partie de support (86) se compose d'un matériau qui est sélectionné parmi le groupe se composant de plastique, de plastique renforcé par des fibres, d'aluminium ou d'un alliage d'aluminium, de zinc ou d'un alliage de zinc, de magnésium ou d'un alliage de magnésium, de cuivre ou d'un alliage de cuivre, de fonte, d'acier ou d'un alliage d'acier.

14. Composant selon l'une quelconque des revendications 11 à 13, dans lequel au moins une pièce d'insertion (60, 62, 64, 66) comprend une portion tubulaire coudée (118), qui relie notamment l'une à l'autre une portion s'étendant axialement et une portion s'étendant radialement de la pièce d'insertion (60, 62, 64, 66).

15. Utilisation d'un composant fabriqué selon l'une quelconque des revendications 1 à 10, ou d'un composant selon l'une quelconque des revendications 11 à 14, en tant que stator (50) pour un passage rotatif fluidique (10), en particulier pour un passage rotatif hydraulique haute pression.
